(19) Europäisches Patentamt
European Patent Office
Office européen des brevets

(11) **EP 3 534 112 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **19160541.9**

(22) Anmeldetag: **04.03.2019**

(51) Internationale Patentklassifikation (IPC):
*G01C 21/20* (2006.01)   *G01C 11/04* (2006.01)
*G01C 15/00* (2006.01)   *G01C 21/32* (2006.01)
*G01S 17/89* (2020.01)   *G05D 1/02* (2020.01)

(52) Gemeinsame Patentklassifikation (CPC):
**G01C 21/32; G01C 11/04; G01C 15/002; G01C 21/005; G01C 21/20; G01S 7/4808; G01S 17/42; G01S 17/89; G05D 1/024; G05D 1/0274**

(54) **VERFAHREN ZUR BESTIMMUNG EINER ELEKTRONISCHEN NUTZBAREN REPRÄSENTATION EINER UMGEBUNG, VORRICHTUNG HIERFÜR, DATENTRÄGER**

METHOD FOR DETERMINING AN ELECTRONICALLY USABLE REPRESENTATION OF AN ENVIRONMENT, APPARATUS THEREFOR, DATA CARRIER

PROCÉDÉ DE DÉTERMINATION D'UNE REPRÉSENTATION UTILE ÉLECTRONIQUE D'UN ENVIRONNEMENT, DISPOSITIF CORRESPONDANT, SUPPORT DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2018 DE 102018104780**

(43) Veröffentlichungstag der Anmeldung:
**04.09.2019 Patentblatt 2019/36**

(73) Patentinhaber: **SICK AG**
**79183 Waldkirch (DE)**

(72) Erfinder:
• **Hansen, Christoph**
**20535 Hamburg (DE)**
• **Röwekämper, Jörg**
**79211 Denzlingen (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
WO-A1-2019/000417   DE-A1-102010 028 090
US-A1- 2005 234 679   US-A1- 2012 323 432
US-A1- 2018 012 370

**Beschreibung**

Die Erfindung betrifft eine Umgebungsrepräsentationsvorrichtung, ein Verfahren zur Bestimmung einer elektronischen nutzbaren Repräsentation einer Umgebung und eine Vorrichtung hierfür. Sie kann Anwendung finden im Gebiet der Steuerung/Regelung autonom beweglicher Objekte, etwa autonom fahrender Fahrzeuge und Fluggeräte/Drohnen, beweglicher Roboter und ähnliches. Sie betrifft den Aufbau von Repräsentation von Umgebungen, in denen sich bewegliche Objekte bewegen können, und die Nutzung solcher Repräsentationen.

In einem engen Sinn können solche Repräsentationen als Karten verstanden werden, die jedoch um bestimmte Merkmale und Informationen erweitert sind. Die Karten können zweidimensional angelegt sein, um etwa die Befahrbarkeit eines bestimmten Terrains abzubilden, oder dreidimensional, um den etwa für Robotik- oder Flugbewegungen zur Verfügung stehenden Raum zu charakterisieren. Die nachfolgende Beschreibung stellt beispielhaft zweidimensionale Repräsentationen/Kartierungen dar. Dies soll aber nicht die Anwendung der Erfindung auf dreidimensionale Repräsentationen ausschließen.

Bekannt ist es, Umgebungen elektronisch auswertbar zu repräsentieren. Solche Repräsentationen werden für mehrere Zwecke herangezogen, etwa zur Positionierung des beweglichen Objekts oder zur Wegführung und Wegfindung für das bewegliche Objekt. Darüber hinaus sind solche Repräsentationen selbst Gegenstand des Interesses insoweit, als sie aktualisiert und fortgeschrieben werden. Es gibt verschiedene Darstellungsarten solcher Repräsentationen.

Eine Darstellungsart sind sogenannte "Gridmaps". Sie entsprechen in etwa den "Bitmaps" von Grafiken. Gridmaps können eine gekachelte Fläche umfassen, auf der die Kachelgröße die kleinste Einheit ist und der möglichen Ortsauflösung entspricht. Zu jeder Kachel können Angaben gespeichert werden, die die Umgebung an der Stelle der Kachel repräsentieren. So können insbesondere Einträge zu Hindernissen hinterlegt sein. Hindernisse und allgemein kartierte Objekte werden nachfolgend auch als "Merkmale" bezeichnet.

Eine andere Darstellungsart ist eine Vektordarstellung entsprechend grafischen Vektorgrafiken.

Eine Technik alternativ zur Kartierung realer Umgebungsmerkmale in einer Umgebungsrepräsentation ist die Repräsentation von eigens angebrachten Reflektoren in Reflektorkarten statt der Repräsentation realer Objekte. Hier werden nicht reale Objekte der Szenerie kartiert, sondern eigens sinnvoll angebrachte Erfassungsziele (Reflektoren), die dann kartiert sind. Auch die Kartierung von Reflektorzielen kann in einer Gridmap erfolgen oder vektoriell.

Allgemein ist zu sagen, dass es in der vorliegenden Erfindung nicht auf die Art der Kartierung, Repräsentation und Darstellung der Inhalte ankommt (reale Ziele, Reflektorziele, Gridmap, vektorielle Darstellung), sondern auf die davon verkörperten Inhalte. Im Folgenden wird die Beschreibung mindestens implizit so gegeben, als ob Gridmaps zu betrachten wären. Die beschriebenen Problematiken sind aber unabhängig von der Darstellungsweise als Gridmap und können ebenso als vektorielle Darstellung erfasst werden und beziehen sich in gleicher Weise auf das Repräsentieren realer Objekte wie Reflektoren.

Autonom fahrende Fahrzeuge umfassen üblicherweise Scanner, mit denen sie die Umgebung um sich erfassen können. In der Regel können sie im Vollkreis um sich herum die Umgebung mit einer bestimmten Auflösung abtasten. Sie erhalten so eine Vermessung der Umgebung, die aussagt, in welcher Richtung wie weit entfernt Hindernisse erfasst wurden. Die Winkelauflösung kann dabei <1° oder <2° oder <5° oder <10° sein. Bei einer Vermessung entstehen auf diese Weise Datenpaare, die jeweils zu einer relativen Winkellage bezogen auf die Fahrzeugausrichtung den Abstand eines Hindernisses angeben.

Häufig kann - nach einer Initialisierung des Fahrzeugs - angenommen werden, dass das Fahrzeug auch in etwa seine Position und seine Ausrichtung kennt. Es können dann relative Ausrichtungen umgerechnet werden auf absolute Ausrichtungen, die denjenigen in der Karte entsprechen. Weiter sind autonom navigierende Fahrzeuge häufig in der Lage, die eigene Position anhand der eigenen Odometrie (Weg- und Positionsschätzung aus der Antriebsauswertung) fortzurechnen. Statt Odometrie kann zur geschätzten Fortrechnung der eigenen Position aber auch vergleichende stereoskopische Bildauswertung oder ähnliches herangezogen werden. Der Nachteil der so fortgerechneten Position ist, dass sie nicht hinreichend genau ist und über die Zeit zunehmend ungenauer wird.

Zur Lösung dieses Problems ist es bekannt, die anhand der Odometrie, einer Bildauswertung oder dergleichen geschätzte Position anhand der Vermessungsdaten nach einem Umgebungsscan mit Daten einer elektronisch auswertbaren Karte bzw. Umgebungsrepräsentation abzugleichen, um so die geschätzte Position möglichst genau auf die reale Position zu bringen.

Unter idealen Bedingungen sind Laserscanner genaue Gerätschaften, die sowohl Richtung als auch Entfernung von Hindernissen/Zielen/Merkmalen genau erfassen können. Allerdings führen reale Umstände dazu, dass Umgebungsscans doch fehlerbehaftet sind. Nachfolgend werden einige Fehlerquellen aufgezählt:

-  Die begrenzte Winkelauflösung kann dazu führen, dass kleine bzw. filigrane Ziele, etwa die Beine eines Regals, nicht erfasst werden, obwohl sie vorhanden sind.
-  Die Oberfläche eines Hindernisses kann spiegelnd sein, so dass ein scannender Laser nicht zurückgestreut wird, sondern mit Ausfallswinkel gleich Einfallswinkel reflektiert wird, was allenfalls zufällig zurück zum Sensor führt.

Dieser Effekt kann richtungsabhängig sein. Ähnliche Probleme treten bei transparenten Flächen auf (Glasflächen, Glastüren)

- Beleuchtungsbedingungen oder Mehrfachreflexionen können eine Auswirkung auf die Auswertung des Laserscans haben und zu Fehlerfassungen führen.

- Einmal erfasste und kartierte Objekte können später verschwunden sein, und umgekehrt. Wird beispielsweise ein überdachtes Freilager als Umgebung angenommen, innerhalb der zu navigieren ist, wird es sehr "stabile" Objekte geben, etwa die Wände oder Säulen des Lagers. Es wird aber auch wechselnde Objekte geben, beispielsweise einzelne auf der Freifläche abgestellte Gegenstände, die zeitweise dort sind und zeitweise nicht. Gleiches gilt für Personen und Fahrzeuge, die sich in der kartierten Umgebung befinden und bewegen.

Es gibt deshalb insgesamt in einer Umgebungsrepräsentation Objekte, die sich dort vergleichsweise stabil befinden, etwa die genannten Wände, aber auch andere Objekte, die ihre Präsenz ändern können (etwa variables Lagergut, Personen) oder Objekte, für die die Detektion schwierig ist.

Bekannt ist es, Umgebungen nicht nur mit einer Ja/Nein-Belegung einzelner Kacheln durch Hindernisse zu charakterisieren, sondern durch Belegungswahrscheinlichkeiten der Kachel, die Vorhandenseinswahrscheinlichkeiten eines erfassbaren Merkmals bzw. Hindernisses auf der Kachel entsprechen. Z. B. die US 2018/0012370 A1 beschreibt dies als sog. "confidence value". Die US 2017/0334069 A1 beschreibt dies als sog. "confidence level". In einem solchen Ansatz kann beispielsweise eine Wand eine sehr hohe Belegungswahrscheinlichkeit haben, die letztendlich auf 1 gesetzt werden kann, während andere Bereiche einer Umgebung andere Belegungswahrscheinlichkeiten haben können. Ein selten genutzter Bereich eines Freilagers kann beispielsweise eine Belegungswahrscheinlichkeit von 0,1 haben. Es wird hierbei davon ausgegangen, dass Wahrscheinlichkeiten wie üblich in der Stochastik mit Zahlenwerten zwischen 0 und 1 charakterisiert werden. Wenn logarithmisch gerechnet wird, entspricht dies dem Zahlenbereich zwischen $-\infty$ und 0.

Statt des schlichten Vorhandenseins oder nicht eines Hindernisses/Merkmals geben entsprechende Repräsentationen dann Belegungswahrscheinlichkeiten von Kacheln an, die ortsaufgelöst kachelweise ermittelt wurden und vorgehalten werden. Die Belegungswahrscheinlichkeit gibt also an, mit welcher Wahrscheinlichkeit ein Hindernis/Merkmal an einer vorbestimmten Position vorhanden ist. Bei der Nutzung der Umgebungsrepräsentation etwa zur Wegfindung oder zur Positionsbestimmung können die Belegungswahrscheinlichkeiten dann zur Gewichtung mehrerer Messungen untereinander herangezogen werden.

Nachteil der Verwendung von Belegungswahrscheinlichkeiten einzelner Flächenbereiche/Kacheln oder Volumenbereiche (im Dreidimensionalen) ist es, dass diese weder den zeitlichen Veränderungen solcher Gegebenheiten noch womöglich auftretenden Erfassungsschwierigkeiten Rechnung tragen. Wenn solche Umgebungsrepräsentationen dann zur Positionsbestimmung oder zur Wegfindung/Wegbestimmung eines beweglichen Objekts herangezogen werden, geschieht die Positionsbestimmung oder Wegbestimmung auf der Grundlage nicht bestmöglich geeigneter Daten.

Die US 2008/0033645 A1 beschreibt wahrscheinlichkeitsgestützte Verfahren zur Kartierung und Lokalisierung im Außenbereich.

Die US 2005/0234679 A1 beschreibt im Kontext der Integration von Sensordaten ein zu berücksichtigendes Unsicherheitsmaß.

Die WO 2019/000417 A1 gehört zum Stand der Technik nach Artikel 54(3) EPÜ und beschreibt ein Kartenerzeugungssystem, bei dem aus einem Fahrzeug heraus eine Karte mit einer Kennzeichnung ihrer Vertrauenswürdigkeit erstellt wird.

Die US 2012/0323432 A1 beschreibt ein Verfahren zum Vereinfachen der Kartendatenverarbeitung. Die betrachteten Karten können statische und dynamische Merkmale abbilden. Merkmalsinformation kann Information über Lageungewissheit enthalten. Beobachtungsrauschen wird bei der Bearbeitung berücksichtigt.

Die DE 10 2010 028090 A1 beschreibt ein Fahrzeug-Navigationssystem, bei dem ein Vertrauenslevel eines Datenlieferanten herabgesetzt wird, wenn es große Abweichungen zwischen einer Kartenbasis und der Realität gibt.

Aufgabe der Erfindung ist es, eine Umgebungsrepräsentationsvorrichtung anzugeben, die bei der Verwendung zu verbesserten Ergebnissen führt. Auch werden ein Verfahren zur Bestimmung einer elektronisch nutzbaren Repräsentation einer Umgebung angegeben und eine Vorrichtung hierfür.

Diese Aufgabe wird mit den Merkmalen der unabhängigen Ansprüche gelöst.

Eine Umgebungsrepräsentationsvorrichtung hat die Merkmale des Anspruchs 1.

Die Umgebungsrepräsentationsvorrichtung macht sich die Erkenntnis zunutze, dass durch die Hinterlegung von ortsaufgelösten Zuverlässigkeitsdaten eine verbesserte Positionsermittlung und eine verbesserte Wegplanung ermöglicht werden, da beispielsweise stark fehlerbehaftete Kartenbereiche bekannt sein können. Ebenfalls können Kartenbereiche bekannt sein, die mit einer hohen Zuverlässigkeit korrekt sind, sodass z.B. bei der Positionsermittlung dann auf diese Kartenbereiche "vertraut" werden kann. Überdies ermöglichen die Zuverlässigkeitsdaten auch weitergehende Verbesserungen im Betrieb z.B. eines autonomen Fahrzeugs, wie später dargelegt.

Die Zuverlässigkeitsdaten geben an, als mit welcher Zuverlässigkeit durch eine Messvorrichtung erfassbar ein jeweiliges Merkmal an einem Ort der Karte angesehen werden kann. Hierzu können beispielsweise mehrere, insbesondere direkt nacheinander und/oder innerhalb einer vorbestimmten Zeitdauer erfolgte Vermessungen der Umgebung herangezogen werden. Liefern alle oder fast alle Vermessungen das gleiche Ergebnis, ist die Zuverlässigkeit sehr hoch (d.h. 1 oder nahe bei 1). Erkennen z.B. nur 50% der Vermessungen ein Hindernis/Merkmal, so kann die Zuverlässigkeit geringer sein, z.B. nur 0,5. Wird in noch weniger Vermessungen das gleiche Ergebnis erzielt, d.h. es wird z.B. nur in 10% der Messungen ein Hindernis/Merkmal erkannt, kann die Zuverlässigkeit beispielsweise nur 0,1 sein. Zur Ermittlung der Zuverlässigkeit kann insbesondere auch ein Pegel eines Messsignals herangezogen werden. Dieser Pegel kann, z.B. bei einem Laserscanner, für transparente Merkmale niedriger sein, was mit einer geringeren Zuverlässigkeit einhergeht.

Die Kartendatenteile stellen Vorhandenseinswahrscheinlichkeiten dar, die ortsauflösend Vorhandenseinswahrscheinlichkeiten von Merkmalen einer Umgebung angeben und die ortsauflösenden angeben, als wie wahrscheinlich vorhanden ein repräsentiertes Merkmal angesehen werden kann. Der Unterschied zwischen der Vorhandenseinswahrscheinlichkeit und der Zuverlässigkeit liegt also insbesondere darin, dass die Vorhandenseinswahrscheinlichkeit sich auf die Wahrscheinlichkeit bezieht, mit welcher ein reales Merkmal tatsächlich vorhanden ist, wohingegen die Zuverlässigkeit sich insbesondere auf die Zuverlässigkeit der Erfassung/Vermessung eines vorhandenen Merkmals/Objekts bezieht (d.h. der z.B. zur Vermessung verwendete Scanner wird bei der Zuverlässigkeit berücksichtigt).

Insbesondere trägt der Datenträger Historiedatenteile, die ortsauflösend Erfassungshistorien von Merkmalen einer Umgebung angeben, und wobei das Schnittstellengerät auch die Historiedaten den anderen Daten ortsauflösend zugeordnet zugänglich macht. Die Historiedatenteile spiegeln also die in der Vergangenheit an einem Ort erfassten Merkmale wieder.

Vorteilhafterweise trägt der Datenträger Markierungsdatenteile, die ortsauflösend markieren, welche der Zuverlässigkeitsdaten und/oder der Kartendaten im Laufe der Zeit änderbar sein sollen und welche nicht, und wobei das Schnittstellengerät auch die Markierungsdaten den anderen Daten ortsauflösend zugeordnet zugänglich macht. Es kann demnach nach änderbaren und nicht änderbaren Zuverlässigkeitsdaten und/oder Kartendaten unterschieden werden.

Außerdem wird ein Verfahren zum Erstellen einer elektronisch nutzbaren Repräsentation einer Umgebung angegeben, in der elektronisch erfassbare Merkmale vorhanden sind. Das Verfahren umfasst die Schritte des Anspruchs 3.

Das Bereitstellen von Kartendaten kann das Ermitteln und/oder Aktualisieren und/oder Abrufen schon existierender Umgebungsrepräsentationsdaten umfassen.

Die Zuverlässigkeitsdaten einzelner Merkmalsbereiche können anhand von Streuungen von zeitnah zueinander ermittelten Messwerten gleicher Kartenbereiche bestimmt werden.

Bevorzugt können die Zuverlässigkeitsdaten einzelner Kartenbereiche manuell eingegeben und/oder verändert werden, vorzugsweise über eine graphische Benutzeroberfläche. Hierdurch kann ausgenutzt werden, dass ein Bediener mit Ortskenntnis zusätzliche Informationen über die Zuverlässigkeit bereitstellen kann.

Die Zuverlässigkeitsdaten können während der Nutzung einer Umgebungsrepräsentation nach Maßgabe aktueller Messwerte eines die Umgebungsrepräsentation nutzenden Geräts oder Fahrzeugs und nach Maßgabe von Historiedaten ermittelt und/oder verändert werden. Die Zuverlässigkeitsdaten sind dementsprechend nicht statisch, sondern können insbesondere regelmäßig aktualisiert werden.

Die Merkmalsdaten der Kartendaten geben ortsauflösend eine Vorhandenseinswahrscheinlichkeit eines Merkmals an. Es werden Vorhandenseinswahrscheinlichkeiten zusätzlich zu den Zuverlässigkeitsdaten ortsauflösend gespeichert.

Es werden die ortsaufgelösten Vorhandenseinswahrscheinlichkeitswerte und die ortsaufgelösten Zuverlässigkeitswerte getrennt gespeichert.

Bevorzugt beschreibt die Umgebungsrepräsentation eine zweidimensionale Fläche oder ein dreidimensionales Volumen. Sowohl Anwendungen in der Ebene als auch im Raum (z.B. mit Drohnen) können auf diese Weise erschlossen werden.

Insbesondere werden für einzelne Kartenbereiche deren Zuverlässigkeitsdaten als unveränderlich gekennzeichnet, vorzugsweise über eine graphische Benutzerschnittstelle. Die so gekennzeichneten Zuverlässigkeitsdaten werden dann nicht mehr verändert.

Bevorzugt ist die repräsentierte Umgebung logisch in eine Vielzahl von (insbesondere gleichen) Kacheln unterteilt, wobei die Kartendaten und die Zuverlässigkeitsdaten kachelweise aufgelöst sind, wobei einer Kachel ein Datentupel zugeordnet sein kann, das für diese Kachel mindestens eine Vorhandenseinswahrscheinlichkeit und einen Zuverlässigkeitswert aufweist und optional auch eine Unveränderlichkeitskennzeichnung.

Vorteilhafterweise sind in der repräsentierten Umgebung mehrere bekannte Reflektorpunkte angebracht, wobei die Kartendaten und die Zuverlässigkeitsdaten reflektorpunktweise aufgelöst gespeichert werden, wobei einem Reflektorpunkt optional auch eine Unveränderlichkeitskennzeichnung zugeordnet ist oder zuordenbar ist. Bei dem Reflektorpunkt kann es sich z.B. um einen optischen Reflektor handeln. Als Reflektorpunkt können aber auch z.B. RFID-(Radio Frequency Identi-fication)-Transponder verwendet werden, die mittels eines RFID-Lesers erfasst werden

Bevorzugt sind einer Kachel bzw. einem Reflektorpunkt historierelevante Daten zugeordnet, insbesondere einer oder mehrere der folgenden Werte

- Zahl der Erfassungen eines Merkmals an der Kachel
- Zahl der Nichterfassung eines Merkmals an der Kachel,
- Zahl der Änderungen der Erfassung eines Merkmals,
- Datum der letzten Erfassung,
- Datum der ersten Erfassung.

Die vorstehend genannten Werte können jeweils zur Ermittlung der Zuverlässigkeit herangezogen werden.

Vorteilhafterweise werden die aktuellen Messwerte durch Vermessen der Umgebung aus der Perspektive des beweglichen Objekts gewonnen, wobei die Vermessung das Erfassen mehrerer Merkmale der Umgebung aufweist und die Messwerte einer zeitlichen Analyse unterzogen werden.

Bevorzugt werden die Zuverlässigkeitsdaten jeweils als Faktor zwischen 0 und 1 ermittelt und/oder als dazu logarithmischer Wert zwischen - ∞ und 0.

Angegeben wird im Anspruch 13 auch eine Vorrichtung zur Durchführung des beschriebenen Verfahrens. Sie kann ein einzelner Rechner sein oder ein Rechnernetz, insbesondere ein verteiltes System mit mindestens zeitweise miteinander vorzugsweise drahtlos verbundenen Rechnern, wobei mindestens einer der Rechner Teil eines autonom navigierenden Fahrzeugs ist, das Sensorik zur Umgebungserfassung aufweist. Das verteilte System kann ein peer-to-peer-System oder ein server-client-system sein oder eine Mischform, etwa einem Server nur zu synchronisierenden/administrativen Tätigkeiten.

Jenseits der patentierten Erfindung wird auch eine Datenträger mit Daten darauf angegeben, die eine Umgebung repräsentieren, mit Kartendatenteilen, die ortsauflösend Merkmale einer Umgebung angeben oder die Herleitung solcher Merkmalsangaben erlauben, und mit Zuverlässigkeitsdatenteilen einzelner angegebener Merkmale, die von den Kartendatenteilen repräsentiert sind, wobei die Zuverlässigkeitsdaten ortsauflösend angeben, als wie zuverlässig erfassbar die jeweils repräsentierten Merkmale angesehen werden können.

Jenseits der patentierten Erfindung wird auch ein Datenträger mit Daten darauf angegeben, die eine Umgebung repräsentieren und die mit einem beschriebenen Verfahren oder einer beschriebenen Vorrichtung erzeugt wurden.

Jenseits der patentierten Erfindung wird auch ein Datenträger mit Daten darauf angegeben, die computerausführbaren Code darstellen, der, wenn ausgeführt, ein beschriebenes Verfahren implementiert.

Weiterhin wird jenseits der patentierten Erfindung ein Verfahren zur Positionsermittlung eines beweglichen Objekts in einer Umgebung beschreiben, in der elektronisch erfassbare Merkmale vorhanden sind. Das Positionsermittlungsverfahren umfasst die Schritte

- Bereitstellen einer digitalen Repräsentation der Umgebung, wobei die Repräsentation mehrere elektronisch erfassbare Umgebungsmerkmale repräsentiert und für wenigstens einige dieser Merkmale auch jeweilige Zuverlässigkeitswerte für deren Erfassung angibt,
- Vermessen der Umgebung aus der Perspektive des beweglichen Objekts, wobei die Vermessung das Erfassen mehrerer der elektronisch erfassbaren Merkmale der Umgebung aufweist,
- Bewerten des Vermessungsergebnisses mit aus der Umgebungsrepräsentation hergeleiteten Daten unter Berücksichtigung vorhandener Zuverlässigkeitswerte, und
- Ermittlung der Position anhand des Bewertungsergebnisses.

Vorteilhafterweise umfasst das Positionsermittlungsverfahren, dass das Bewerten mit einem Partikelfilteralgorithmus erfolgt, der folgende Schritte aufweisen kann:

a. Festlegen einer vermuteten Position des Objekts und mehrerer hypothetischer Positionen,
b. für jede der festgelegten hypothetischen Positionen aus deren jeweiliger Perspektive digitales Ermitteln je einer hypothetischen Vermessungen, wobei die hypothetische Vermessung das hypothetische Erfassen mehrerer der elektronisch erfassbaren Merkmale der Umgebung aus der jeweiligen Perspektive aufweist, und
c. Ermitteln einer Richtigkeitswahrscheinlichkeit we jeder hypothetischen Position nach Maßgabe des Unterschieds zwischen hypothetisch bestimmtem und real ermitteltem Abstand und nach Maßgabe vorhandener Zuverlässigkeitswerte der hypothetisch erfassten Merkmale, wobei die Abstände die zwischen hypothetischer Position und einem erfasstem Merkmal bzw. zwischen der vermuteten Position und einem entsprechenden erfassten Merkmal sind.

Bevorzugt ist das Positionsermittlungsverfahren so ausgestaltet, dass dessen Schritt c. für jede hypothetische Position die folgenden Schritte aufweist:

a. Ermitteln der Richtigkeitswahrscheinlichkeit we jeder einzelnen hypothetischen Merkmalserfassung nach Maßgabe des genannten Unterschieds, und

b. Herleiten eines Gesamtwahrscheinlichkeitswertes wh der hypothetischen Position aus den einzelnen Richtigkeitswahrscheinlichkeiten we der hypothetischen Merkmalserfassungen, wobei die Zuverlässigkeitswerte der erfassten Merkmale im Schritt a. und/oder im Schritt b. berücksichtigt werden.

Die Richtigkeitswahrscheinlichkeit we gibt also bevorzugt die Wahrscheinlichkeit an, mit der die Position des Objekts (z.B. des selbstfahrenden Fahrzeugs) korrekt ermittelt wurde. In die Richtigkeitswahrscheinlichkeit we können dabei auch die Zuverlässigkeitswerte eingehen.

Weiter bevorzugt ist das Positionsermittlungsverfahren so ausgestaltet, dass das Bewerten im Schritt c, auch nach Maßgabe einer Vorhandenseinswahrscheinlichkeit eines elektronisch erfassbaren Merkmals erfolgt.

Das Ermitteln einer Richtigkeitswahrscheinlichkeit we jeder einzelnen hypothetischen Erfassung kann anhand einer Gaußverteilung erfolgen, bei der der genannte Unterschied die Abszisse darstellt und bei der der Zuverlässigkeitswert, der einem hypothetisch erfassten Merkmal zugeordnet ist, als Faktor zwischen 0 und 1 im Exponenten und/oder an der Gaußverteilung berücksichtigt werden kann.

Bei dem Positionsermittlungsverfahren kann das Herleiten des Gesamtwahrscheinlichkeitswertes wh durch Multiplizieren der einzelnen Bewertungsergebnisse der hypothetischen Erfassungen erfolgen oder durch Summieren entsprechender logarithmischer Werte, wobei hier die Zuverlässigkeitswerte, die den jeweils hypothetisch erfassten Merkmal zugeordnet sind, als Faktoren zwischen 0 und 1 oder entsprechende logarithmische Werte der Summe berücksichtigt werden können.

Bevorzugt weist das Positionsermittlungsverfahren das Wählen der Positionen einer der hypothetischen Positionen nach Maßgabe der ermittelten Wahrscheinlichkeit als Objektposition auf. Insbesondere wird diejenige Position als Objektposition ausgewählt, die die höchste Wahrscheinlichkeit besitzt.

Vorteilhafterweise umfasst das Positionsermittlungsverfahren eine gewichtete Verrechnung der Positionen mehrerer der hypothetischen Positionen, insbesondere nach Maßgabe deren ermittelter Wahrscheinlichkeiten.

Bevorzugt kann das Bewerten mit einem Monte-Carlo-Algorithmus erfolgen.

Jenseits der patentierten Erfindung wird ein Verfahren zur Wegplanung für ein bewegliches Objekt in einer Umgebung angegeben. Es hat die Schritte (a) Bereitstellen einer digitalen Repräsentation der Umgebung, die mehrere Umgebungsmerkmale repräsentiert und für wenigstens einige dieser Merkmale auch jeweilige Zuverlässigkeitswerte angibt oder deren Herleitung erlaubt, (b) Setzen eines Wegpunktes als ersten Punkt eines zu planenden Wegs, (c) Wählen eines dem ersten Punkt folgenden und von diesem räumlich beabstandeten zweiten Punkt anhand eines Wegfindungskriteriums, (d) Überprüfen des zweiten Punktes und gegebenenfalls weiterer Punkte auf Befahrbarkeit unter Verwendung der digitalen Repräsentation einschließlich der angegebenen Zuverlässigkeitswerte, und (e) wenn die Überprüfung ein vorgegebenes Kriterium erfüllt, Setzen des zweiten Punktes als weiteren Wegpunkt und als neuen ersten Punkt und Fortsetzen des Verfahrens bei (c), andernfalls Wählen eines anderen dem ersten Punkt folgenden und von diesem räumlich beabstandeten zweiten Punktes anhand eines Wegfindungskriteriums und Fortsetzen des Verfahrens bei (d).

In einer Option nutzen das Positionsermittlungsverfahren und das Wegfindungsverfahren eine oben beschriebene Umgebungsrepräsentation. Und auch zu ihnen werden durchführende Vorrichtungen und Datenträger mit geeignet entsprechend individualisierten Daten darauf angegeben.

Weitere Merkmale der Erfindung ergeben sich aus der nachfolgenden Beschreibung. Es wird auf die beiliegenden Zeichnungen Bezug genommen, es zeigen:

Fig. 1    schematisch eine Umgebung, die elektronisch zu repräsentieren ist,

Fig. 2    eine schematische Darstellung eines Teils einer Repräsentation einer Umgebung,

Fig. 3    einander zugeordnete oder zuordenbare Datenteile eines Merkmals einer Umgebungsrepräsentation,

Fig. 4a    schematisch die Situation bei der nicht zur patentierten Erfindung gehörenden Ortsermittlung eines mobilen Geräts,

Fig. 4b    Darstellungen zu einem nicht zur patentierten Erfindung gehörenden Partikelfilteralgorithmus, und

Fig. 5    schematisch ein autonom fahrendes Fahrzeug als ein Beispiel eines Geräts, in dem die Erfindung implementiert sein kann.

Nachfolgend werden als "Merkmale" elektronisch erfassbare Objekt bezeichnet, die für die Bewegung eines sich autonom bewegenden Objekts, etwa eines fahrenden Fahrzeugs, Relevanz haben, etwa ein Bewegungshindernis darstellen. Auch deren Abbild in einer Kartierung/Umgebungsrepräsentation kann mit "Merkmal" angesprochen sein. Es kann sich hierbei etwa um Wände, Regalstützen, Türen, Lagergut, andere Fahrzeuge, Personen, Fensterflächen, Verglasungen, Reflektoren oder ähnliches handeln - oder deren Abbild in einer Umgebungsrepräsentation.

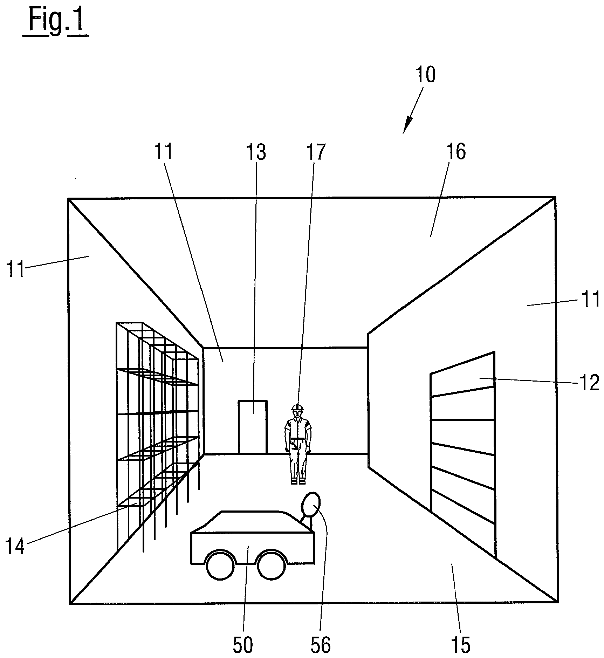

Fig. 1 zeigt schematisch eine typische Umgebung, die elektronisch nutzbar repräsentiert werden soll. Gezeigt ist ein breiter Gang, der hinten rechts abknickt, hinten eine Tür 13 aufweist, an der rechten Wand ein Rolltor 12 und an der linken Wand ein Regal 14. Er ist umgrenzt von Wänden 11, einem Boden 15 und einer Decke 16. Eine Person 17 bewegt sich in dem Gang.

Gezeigt ist auch ein Fahrzeug 50, das als autonom fahrendes Fahrzeug verstanden wird, etwa um Güter in bestimmter Weise zu transportieren. Das Fahrzeug 50 weist eine Vermessungsvorrichtung 56 auf, mittels derer die Fahrzeugumgebung vermessen werden kann.

Die Vermessungsvorrichtung 56 kann beispielsweise in einer Ebene parallel zum Boden 15 mit gewünschtem oder vorgegebenem oder einstellbarem Abstand vorhandene Hindernisse um das Fahrzeug bzw. bewegliche Objekt herum detektieren. Sie kann ein LIDAR (Light Detection and Ranging) oder LADAR (Laser Detection and Ranging) aufweisen, mittels derer in gewünschter Winkel- oder Ortsauflösung Hindernisse zu erkennen versucht wird. Die Vermessungsvorrichtung 56 kann schnell vorzugsweise rund um das Fahrzeug herum oder wenigstens in einem Sektor in Vorausrichtung der Bewegung scannen und auf diese Weise Datenpaare von Richtung und Abstand zu einem zurückstreuenden Merkmal erzeugen. Sie kann in einer Ebene scannen oder auch den Raum dreidimensional abtasten und vermessen.

Schwierigkeiten treten beispielsweise dann auf, wenn in einer elektronischen Repräsentation der Szenerie 10 das Regal 14 als sicher vorhanden markiert ist, aber zufälligerweise bei der Umgebungsvermessung mit der Vermessungsvorrichtung 56 die vertikalen Stützen des Regals 14 nicht getroffen wurden, so dass nur die Wand dahinter erkannt wurde. Ähnliche Schwierigkeiten treten auf, wenn bei der Kartenaktualisierung schon früher eine Person 17 als zurückstreuendes Ziel erkannt wurde und dementsprechend zu gewissen Kartenaktualisierungen führte, aber bei der momentanen Vermessung/Scan nicht vorhanden ist und deshalb keine Rückstreuung bewirkt. Ähnliche Schwierigkeiten ergeben sich bei transparenten Hindernissen, wie etwa einer Glastür 13 oder allgemein bei Türen und Toren 12, die manchmal geöffnet und manchmal geschlossen sein können.

In solchen Situationen sind auch Belegungswahrscheinlichkeiten von Kacheln (Vorhandenseinswahrscheinlichkeiten von Merkmalen/Hindernissen) nicht hilfreich. Das Regal 14 bzw. dessen Stützen kann als konstant vorhanden angesehen werden und hat demnach eine Belegungswahrscheinlichkeit von 1. Trotzdem kann seine Erfassung aus den genannten Gründen misslingen. Eine Glastür 13 kann gelegentlich geöffnet sein und hat deshalb vielleicht eine Belegungswahrscheinlichkeit/Vorhandenseinswahrscheinlichkeit von 0,9. Die Tatsache aber, dass sie aus Glas gefertigt ist, macht ihre Erfassung schwierig, so dass sie tatsächlich möglicherweise nicht regelmäßig erfasst wird, selbst wenn sie geschlossen ist. Die beiden genannten Beispiele betreffen erfassungstechnische Schwierigkeiten von Merkmalen (Regal 14, Tür 13).

Selbst aber wenn Merkmale an sich gut und vergleichsweise sicher zu erfassen sind (etwa die Person 17, das Rolltor 12, wenn geschlossen), können Belegungswahrscheinlichkeiten/Vorhandenseinswahrscheinlichkeiten nicht hinreichend aussagekräftige Daten geben. Wird beispielsweise angenommen, dass ein bestimmtes Areal des Ganges zu 5% der Zeit von einer Person 17 eingenommen wird und deshalb der oder den zugehörigen Kacheln eine Belegungswahrscheinlichkeit von 5% (0,05) zugeordnet wird, sagt dies nichts über die Dynamik oder die Häufigkeit der Änderungen des Belegtzustands der jeweiligen Kacheln aus.

Um den genannten Schwierigkeiten abzuhelfen, weist eine Umgebungsrepräsentation neben den Merkmalsdaten auch Zuverlässigkeitsdaten auf, die angeben, als wie zuverlässig durch eine Messvorrichtung erfassbar ein jeweiliges Merkmal angesehen werden kann.

Allgemein kann gesagt werden, dass die Zuverlässigkeitsdaten als Faktor mit einem analogen Wert zwischen 0 (sehr unzuverlässig) und 1 (sehr zuverlässig) angegeben sein können. Diese Normierung hat den Vorteil, dass sie dann in stochastischer Rechnerei entsprechend den üblichen stochastischen Regeln verwendet werden können.

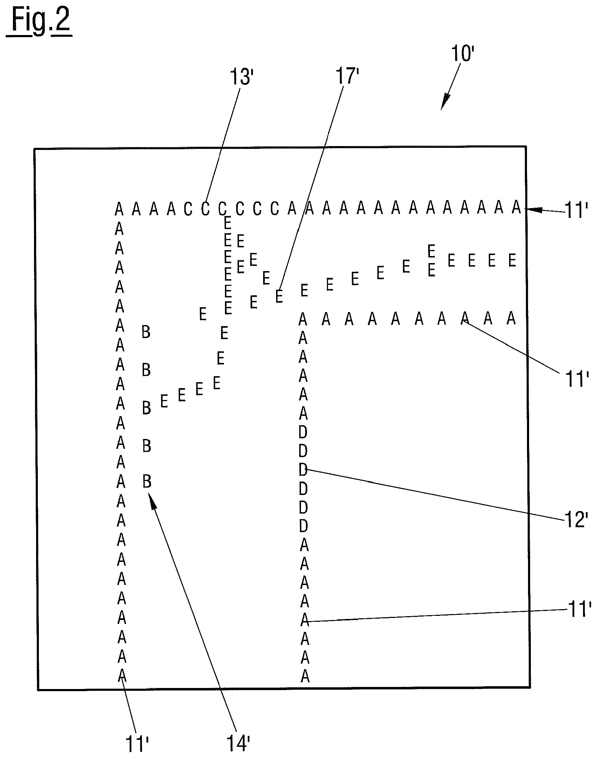

Fig. 2 zeigt schematisch und qualitativ die Zuordnung von Zuverlässigkeitsdaten zu Kacheln einer Szenerie, die in etwa der der Fig. 1 entspricht. Nicht gezeigt sind die ebenfalls vorhandene Belegungswahrscheinlichkeiten oder Belegungen der Kacheln der Szenerie. Gezeigt ist schematisch die Draufsicht auf den in Fig. 1 gezeigten Gang. Außerdem sind schematisch einige Zuverlässigkeitseinträge mit Buchstaben angedeutet. Mit 11' sind Abbilde von Wandbereichen angedeutet, die als zuverlässig vorhanden und erfassbar angesehen werden können. Die Belegungswahrscheinlichkeit hierfür (nicht gezeigt) wäre 1, da die Wände stabil stehen, und die Zuverlässigkeitsdaten können auch als 1 oder sehr nahe bei 1 (0,99) festgelegt werden.

Für das Regal 14 sind zugeordnete Zuverlässigkeitswerte 14' mit B markiert. Die (nicht gezeigte) Belegungswahrscheinlichkeit der zugehörigen Kacheln ist 1 (100%), da das Regal ständig vorhanden ist. Die Zuverlässigkeit kann aber geringer sein, etwa 0,8, da es gelegentlich vorkommen kann, dass eine Regalstütze beim Vermessen der Umgebung durch die Vermessungsvorrichtung 56 nicht erfasst wird, obwohl sie vorhanden ist.

Ähnliches gilt für den Bereich 13' der Tür 13. Wird angenommen, dass die Tür 5% der Zeit geöffnet (nicht vorhanden) ist, ist die Belegungswahrscheinlichkeit der zugehörigen Kacheln 95% (0,95). Da aber die Tür aus Glas ist, kann sie oft der Erfassung entgehen, so dass die zugehörigen Zuverlässigkeitswerte beispielsweise 0,3 sein können.

Im Beispiel von Person 17 und Rolltor 12 können die zugeordneten Zuverlässigkeitswerte 17' oder 12' vergleichsweise hoch sein, beispielsweise 0,98, wenn die Erfassung dieser Merkmale vergleichsweise zuverlässig erfolgen kann, während die Belegungswahrscheinlichkeiten gering sein können, bspw. 0,1.

Auf diese Weise entstehen neben der eigentlichen Kartierung (mittels ja/nein-Markern oder Belegungswahrscheinlichkeiten = Vorhandenseinswahrscheinlichkeiten) weitere ortsauflösende bzw. ortsaufgelöste Daten. Es sei in diesem Zusammenhang darauf verwiesen, dass die Ortsauflösung der Belegungswahrscheinlichkeiten bzw. Vorhandenseinswahrscheinlichkeiten gleich der Ortsauflösung der Zuverlässigkeitsdaten sein kann oder auch anders sein kann.

Auch wird nochmals darauf verwiesen, dass der Bezug auf Kacheln und gridmapähnliche Darstellungen nur der Veranschaulichung dient und keine Aussage darüber treffen soll, wie tatsächlich die Speicherung der Daten erfolgt. Sie können in anderen Formaten als Gridmap gespeichert sein. Auch sei nochmals wiederholt, dass statt der Erfassung realer Objekte (Wand, Regal, Person, Tür, ...) die Erfassung dedizierter Objekte vorgesehen sein kann, etwa von Reflektoren, die in Reflektorkarten kartiert sein können. Auch bei diesen Merkmalen können Erfassungsschwierigkeiten auftreten, etwa wenn sie schlicht verstellt sind, verstauben oder ähnliches.

In Fig. 2 sind mit den A bis E Bereiche unterschiedlicher Zuverlässigkeitsdaten angedeutet. Mit gleichen Buchstaben soll hier nicht ausgesagt werden, dass die Zuverlässigkeitsdaten alle gleich sind. Aber sie tragen jedenfalls ähnlichen Umständen Rechnung und können sehr ähnlich zueinander sein.

Die Verwendung der ermittelten Zuverlässigkeitswerte erfolgt derart, dass sie letztendlich in die Bewertung aktueller Vermessungsergebnisse zur nicht zur patentierten Erfindung gehörenden Positionierung oder bei der Bewertung von Wegstellen bei der Routenplanung einfließen. Die Gestaltung ist derart, dass zuverlässiger bewertete Merkmale stärker gewichtet werden als unzuverlässiger bewertete Merkmale. Dies führt dazu, dass als zuverlässiger bewertete Merkmale das Ergebnis stärker dominieren als unzuverlässigere, so dass schlussendliche Ergebnisse mit höherer Wahrscheinlichkeit richtig sind bzw. höher wahrscheinlich näher am objektiv richtigen Wert liegen.

Im Folgenden wird ein Verfahren zur Bestimmung einer elektronisch nutzbaren Repräsentation einer Umgebung angegeben. Die Repräsentation repräsentiert Merkmale der Umgebung in ortsaufgelöster Weise. Das Verfahren hat zumindest die Schritte Bereitstellen von Kartendaten, das Ermitteln von Zuverlässigkeitsdaten und das Speichern der Kartendaten und der Zuverlässigkeitsdaten in ortsauflösend einander zugeordneter Weise als Umgebungsrepräsentation, wie in Anspruch 3 definiert.

Das Bereitstellen der Kartendaten kann das neue Ermitteln von Kartendaten umfassen oder deren Aktualisierung oder das Abrufen schon existierender Kartendaten. Als Kartendaten werden hier Merkmalsrepräsentationen angesehen, also Angaben darüber, wo in der repräsentierten Umgebung ein Merkmal (Hindernis) vorhanden ist.

Den so bereitgestellten Kartendaten werden Zuverlässigkeitsdaten ortsauflösend bzw. ortsaufgelöst zugeordnet. Die Zuverlässigkeitsdaten haben die oben beschriebene Qualität. Alle Daten werden dann ortsauflösend zugeordnet gespeichert.

Allgemein kann gesagt werden, dass die Ermittlung der Zuverlässigkeitswerte einmal anfänglich initialisierend und/oder fortlaufend während der realen Nutzung der Daten in neu anlegender oder aktualisierender Weise erfolgen kann. Es kann eine Default-Vergabe von Zuverlässigkeitswerten vorgesehen sein, die beispielsweise 0,95 für alle Kacheln setzt. Ausgehend davon können später Veränderungen vorgenommen werden.

Die eigentliche Ermittlung der Zuverlässigkeitsdaten kann auf mehrere unterschiedliche Arten geschehen. Sie können beispielsweise manuell ortsauflösend eingegeben werden, etwa über eine grafische Benutzerschnittstelle. Beispielsweise kann den Kacheln B des Abbilds 14' des Regals 14 eine geringere Zuverlässigkeit als 1 zugeordnet werden. Ähnliches gilt für die Kacheln C des Abbilds 13' der Glastür 13. Kacheln A von Abbilden 11' von Wänden können auf einen sehr hohen Zuverlässigkeitswert (0,99 oder 1) gesetzt werden. Andere Bereiche können entsprechend ihrer Erfassbarkeit andere Werte erhalten. Statt der Eingabe von Zuverlässigkeitsdaten können auch Materialdaten ortsauflösend eingegeben oder übernommen werden und diesen Materialdaten automatisch oder manuell Zuverlässigkeitsdaten zugeordnet werden, z. B hohe Werte nahe oder genau 1 bei herkömmlichen Wänden, geringere Werte bei spiegelnden Oberflächen und niedrige Werte nahe 0 bei Glasflächen von Fenstern, Toren oder Türen.

Es können weiterhin Historiedaten ortsauflösend gespeichert sein, die Rückschlüsse über den Verlauf der Merkmalserfassungen der einzelnen Kacheln erlauben.

Als Historiedaten können gespeichert werden:

- Datum der letzten Erfassung (wobei Datum tatsächlich das Datum im landläufigen Sinne sein kann, und/oder ein mehr oder minder genauer Zeitpunkt bis hin zu sekundengenau oder ähnliches),
- Zählen, wie oft eine Kachel als belegt erkannt wurde,
- Zählen, wie oft eine Kachel als frei erkannt wurde,
- Zählen, wie oft eine Änderung des Belegtzustands einer Kachel erkannt wurde,

- Anlagedatum des Kartierungswerts (d.h. Anlagedatum der Vorhandenseinswahrscheinlichkeit).

Auch diese Daten werden ortsauflösend erhoben und gespeichert und dann entsprechend zur ortsauflösenden Bestimmung von Zuverlässigkeitsdaten herangezogen.

Eine weitere Möglichkeit der Bestimmung von Zuverlässigkeitsdaten von Merkmalen/Kacheln ist es, Streuungen bei Merkmalserfassungen zeitnaher Vermessungen auszuwerten. "Zeitnah" kann hierbei bedeuten, dass der zeitliche Abstand der Vermessungen < 20 min, < 10 min, < 5 min, < 2 min oder < 1 min oder < 30 s sein soll. Wenn bei solchen zeitlich knapp beabstandeten Vermessungen der Umgebung unterschiedliche Ergebnisse in einer bestimmten kartierten Region erscheinen (d.h. Streuungen ein vorbestimmtes Maß überschreiten), ist es wahrscheinlich, dass diese unterschiedlichen Ergebnisse nicht auf Veränderungen des Zustands der Umgebung zurückzuführen sind, sondern darauf, dass die Vermessung derselben unzuverlässig ist.

Wenn beispielsweise ein Fahrzeug 50 (in Fig. 1) am dort ebenfalls gezeigten Regal 14 vorbeifährt und etwa im Abstand von jeweils 1 s mehrere Messungen macht und dabei gelegentlich die Regalstützen "sieht" und gelegentlich nicht, weil diese Stützen tendenziell filigrane Strukturen sind, werden sich im Bereich des Regals 14 streuende Werte ergeben, die manchmal ein Vorhandensein anzeigen und manchmal nicht. Aus solchen Streuungen kann gefolgert werden, dass am jeweiligen Ort unzuverlässig erfassbare Merkmale vorhanden sind. Ähnliches gilt beispielsweise für die Erfassung einer Glastür oder Glasfläche.

Um solche Auswertungen vornehmen zu können, können ältere Vermessungsergebnisse zwischengespeichert werden, ohne gleich kartiert zu werden. "Alte" zwischengespeicherte Daten können dann gelöscht werden. Insoweit kann das Speichern von Historiedaten auch die Speicherung von Messhistorien umfassen, was wiederum das Zwischenspeichern älterer Vermessungen umfasst. Die Begrenzung solcher Historien kann anhand der Zeit erfolgen (also etwa dahingehend, dass alles, was älter als eine Schwelle, etwa 1 Tag oder 1 h oder älter als 1/2 h oder älter als 10 min oder älter als 5 min ist, gelöscht wird) oder als Speichern einer Anzahl von jüngsten Vermessungen (also beispielsweise 20 oder 15 oder 10 oder 5 Vermessungen) und Ersetzen der jeweils ältesten durch die jeweils aktuell gewonnene.

Zuverlässigkeitswerte können auch nach Maßgabe der Art der Generierung von zugehörigen Belegungswahrscheinlichkeiten vergeben und dann gespeichert werden. Belegungswahrscheinlichkeiten können bspw. durch besondere Mustererkennungsverfahren und/oder Mustervervollständigungsverfahren gesetzt oder ergänzt werden. Dann können zugehörige Zuverlässigkeitsdaten bspw. auf einen bestimmten Defaultwert gesetzt werden, der anders sein kann als womöglich anderweitig verwendete Defaultwerte, oder die Zuverlässigkeitswerte können nach Maßgabe einer vorher vorgenommenen quantitativen Abschätzung der Zuverlässigkeit der Mustererkennung bzw. -vervollständigung gesetzt werden.

Soweit für Reflektorkarten die Zuverlässigkeit der Erfassung jeweiliger Reflektoren zu ermitteln ist, kann die Standardabweichung der aus den einzelnen Messungen bestimmten Reflektormittelpunkte als Maß für die Zuverlässigkeit der Information verwendet werden.

Allgemein können die Zuverlässigkeitswerte veränderlich sein und mit besonderen Verfahren überarbeitet bzw. aktualisiert werden. Dies kann bspw. in Echtzeit nach Maßgabe von während der Nutzung der Umgebungsrepräsentation von nützenden beweglichen Objekten 50 erhobenen Daten erfolgen. Es können aber auch einzelne Kartenbereiche (Bereiche mehrerer Kacheln, Merkmale) als unveränderlich in ihren Zuverlässigkeitswerten markiert werden. Beispielsweise kann für Wände entsprechend Bereichen A in Fig. 2 festgelegt werden, dass deren einmal gesetzter Zuverlässigkeitswert (von etwa 0,98) nicht nach Maßgabe späterer Ereignisse modifiziert werden soll. Dieser Unveränderlichkeitsmarker kann auch wieder ortsauflösend gesetzt und zugeordnet bzw. zuordenbar gespeichert werden.

Der Zuverlässigkeitswert eines Merkmals (einer Kachel) kann beispielsweise als Wert zwischen 0 und 1 gespeichert sein und in dieser Formatierung und Skalierung in stochastischen Rechnungen verwendet werden. Es sind grundsätzlich aber auch andere Speicherformate denkbar. Diese sind dann bei der jeweiligen Verrechnung entsprechend zu berücksichtigen. Das gleiche gilt für die Vorhandenseinswahrscheinlichkeiten. Wenn Vorhandenseinswahrscheinlichkeiten und Zuverlässigkeitsdaten ortsauflösend in statistisch verrechenbarem Format vorliegen, können sie ortsaufgelöst zu einem gemeinsamen Wert verrechnet und so ortsaufgelöst zusätzlich zu den Ausgangswerten gespeichert werden. Wenn beide beispielsweise jeweils als statistischer Faktor zwischen 0 und 1 gespeichert sind, kann die Verrechnung eine Multiplikation sein, und die Speicherung kann dann z. B. als Datentripel bestehend aus Vorhandenseinswahrscheinlichkeit (Bsp.: 0,9), Zuverlässigkeitswert (Bsp.: 0,8) und dem verrechneten Wert (zu den Beispielen 0,9 * 0,8 = 0,72) zum zugehörigen Ort erfolgen.

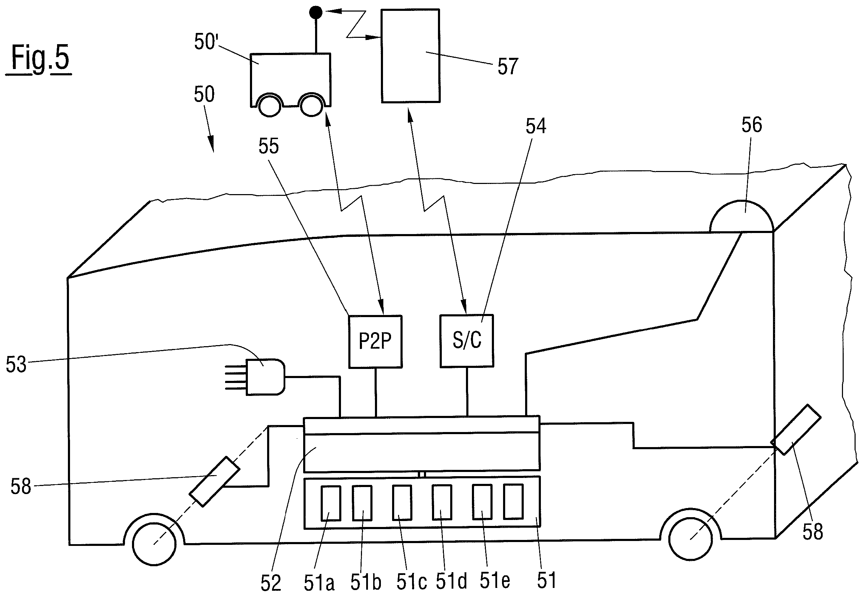

Ein Aspekt der Darbietung von Zuverlässigkeitswerten ist auch eine Vorrichtung zur Repräsentation einer Umgebung, die mit anderen Vorrichtungen zusammenarbeitet, die die Umgebungsrepräsentation nutzen wollen, etwa zur Ortsbestimmung, zur Navigation/Wegfindung oder zur Aktualisierung derselben. Die Umgebungsrepräsentationsvorrichtung 50 ist schematisch in Fig. 5 gezeigt.

Ganz allgemein sei vorab gesagt, dass die Hardware zur Implementierung der beschriebenen Verfahren und Verfahrensschritte üblicherweise ein geeignet programmierter Rechner oder ein verteiltes System mit mehreren Rechnern ist. Wenn ein verteiltes System vorgesehen ist, kann es ein peer-to-peer-System sein, also ein System mehrerer gleichartiger Rechner, die zumindest zeitweise drahtlos und/oder leitungsgestützt verbunden sind, oder es kann ein Server/Client-System sein, in dem die Funktionen geeignet verteilt sind. Auch Mischformen hierzu sind denkbar, etwa derart, dass die wesentlichen Verfahrensschritte in den einzelnen Fahrzeugen 50, 50' vorgenommen werden und ein zentraler Server 57 Synchronisationen vornimmt.

Das Fahrzeug 50 weist einen Speicher 51 auf, in dem die bisher angesprochenen Daten gespeichert sind. Angedeutet sind mehrere Speicherbereiche 51a bis 51e, wobei dies nur eine grafische Repräsentation ist und nicht notwendigerweise ein Abbild der tatsächlich vorhandenen Daten- und Speicherstruktur sein muss. 51a symbolisiert die Speicherung von Kartendatenteilen, also Angaben zu Merkmalen/Hindernissen. 51b symbolisiert die Speicherung der Zuverlässigkeitsdaten z. B. im weiter oben beschriebenen Format. 51c symbolisiert die Speicherung von Historiedaten, wie schon dargestellt. 51d symbolisiert die Speicherung von Markern für die Veränderlichkeit bestimmter Daten. 51e symbolisiert einen Zwischenspeicher zum zeitweisen Speichern etwa von Vermessungsergebnissen. Weitere Speicherbereiche können vorgesehen sein entsprechend den Notwendigkeiten der digitalen Gerätschaften.

52 symbolisiert ein Schnittstellengerät, das die gespeicherten Daten lesend zugänglich macht und/oder einspeichernd pflegt, aufbaut und aktualisiert. Die Ortsauflösung der einzelnen Datenteile kann zueinander gleich oder unterschiedlich sein. Wenn unterschiedlich, können Interpolationen zur Anpassung vorgenommen werden oder Zuordnung feiner gerasteter Daten zu "in der Nähe liegenden" Daten gröberer Rasterung vorgenommen werden.

Allgemein kann das Schnittstellengerät 52 die nötige ortsauflösende Zuordnungen der Datenteile beim Auslesen vornehmen, wenn die Zuordnungen sich nicht sowieso aus der Speicherstruktur ergeben. Das Schnittstellengerät kann auch beim Auslesen womöglich nötige Konversion jeweiliger Vektordaten, wenn das das Speicherformat der Daten ist, in geographisch verteilte Gridmapdaten vornehmen und beim Einlesen umgekehrt dazu arbeiten.

Die Schnittstellenvorrichtung 52 kann auch Schnittstellen zu den übrigen systemnotwendigen Teilen aufweisen, also etwa Steckverbindungen 53 für leitungsgebundene Kommunikation, die zumindest zeitweise genützt werden kann, eine peer-to-peer-Schnittstelle 55, eine Server-Client-Schnittstelle 54 und eine Verbindung hin zur Messvorrichtung 56. Die peer-to-peer-Schnittstelle 55 und die Server-Client-Schnittstelle 54 können drahtlos sein und technisch betrachtet die gleiche Schnittstelle sein, beispielsweise eine Funkverbindung, die mit verschiedenen Adressen verwendet wird. Sie können aber auch technisch unterschiedlich angelegt sein, abhängig von technischen Notwendigkeiten wie Bandbreite, Zuverlässigkeit, Reichweite und ähnlichem.

Die Messvorrichtung 56 dient dazu, die Umgebung des Fahrzeugs zu vermessen. Es kann sich hierbei um das schon genannte LIDAR oder LADAR handeln. Aber auch Bildverarbeitung, insbesondere stereoskopisch, ist denkbar. Sie ist dazu ausgelegt, mindestens in Fahrtrichtung voraus und vorzugsweise vollständig um das Fahrzeug herum die Umgebung zu erfassen und Merkmale nach Richtung und Abstand zu erkennen. Die Vorrichtung 56 kann weitgehend autonom arbeiten und periodisch die Umgebung vermessen. Hierbei fallen die schon genannten Daten zur Erfassung von Merkmalen an, die dann zwischengespeichert und weiterverarbeitet werden können. Die Schnittstellenvorrichtung 52 ist darüber hinaus allgemein als Fahrzeugsteuerung zu verstehen, die die allgemeinen Fahrzeugfunktionen steuert, etwa Steuerung der Antriebsmotoren 58, der Bremsen, Lenkung und ähnliches.

Die beschriebenen Verfahren zur Ermittlung der Zuverlässigkeitswerte können im verarbeitenden Teil der Schnittstellenvorrichtung 52 ausgeführt werden. Sie können aber auch in einem angebundenen Server durchgeführt werden.

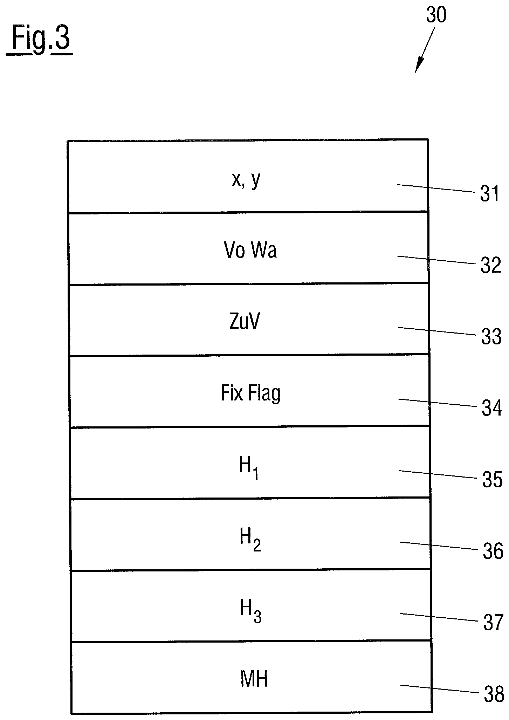

Fig. 3 zeigt schematisch einen Datentupel 30, das einem Merkmal der repräsentierten Umgebung (einer Kachel bei Darstellung als Gridmap) zugeordnet oder zuordenbar sein kann. Möglich, aber nicht notwendig ist es, dass einem solchen Tupel explizit Koordinatendaten 31 zugeordnet sind, die den Ort in der repräsentierten Umgebung in der nötigen Genauigkeit/Auflösung angeben. Vorgesehen ist eine Merkmalsangabe 32, die Angaben zum Vorhandensein eines Merkmals macht. Mit 33 sind die wie beschrieben erhobenen Zuverlässigkeitsdaten angedeutet, die den jeweiligen Merkmalen/Kacheln zugeordnet wird. Mit 34 (optional) ist eine Markierung angedeutet, die angibt, ob die bei 33 gespeicherte Zuverlässigkeitsdaten aktualisiert werden sollen oder nicht. 35 bis 37 (optional) deutet verschiedene Historiedaten an, die kachelspezifisch vorhanden sind, wie weiter oben beschrieben.

Unabhängig davon können die zeitweise gespeicherten Vermessungshistorien gespeichert sein. Sie können aber auch kachelweise abgelegt sein, was durch 38 angedeutet ist. Weitere Speicherungen können ortsauflösend /kachelweise /merkmalsweise vorgenommen werden. Wie schon mehrfach gesagt, kann das Speicherformat ähnlich wie in Fig. 3 gezeigt für jede Kachel implementiert sein.

Schon die wie beschrieben zusammengestellten Daten repräsentieren die Erfindung. Deshalb werden auch die wie beschrieben zusammengestellten Daten bzw. ein Datenträger mit diesen Daten darauf (auch, wenn er verteilt vorgesehen ist) als Teil der Erfindung angesehen. Die Daten repräsentieren das, was in Fig. 3 für eine einzige Kachel/für ein einziges Merkmal dargestellt ist, für die gesamte repräsentierte Umgebung. Schematisch ist die Speicherung dieser Daten auch in Fig. 5 zu Bezugsziffer 51 mit den einzelnen Speicherbereichen 51a bis 51e angesprochen worden. Diese Daten bzw. Datenträger können für sich alleine Handelsware sein, so dass sie auch für sich alleine als die Erfindung repräsentierend angesehen werden.

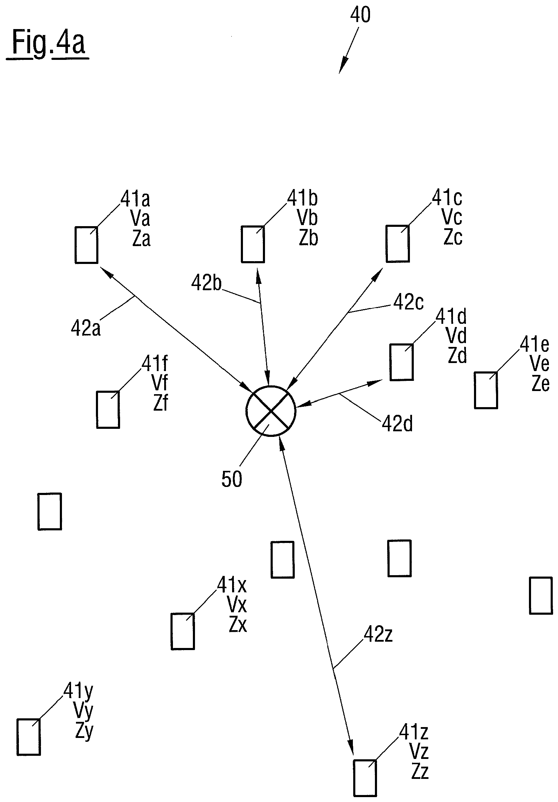

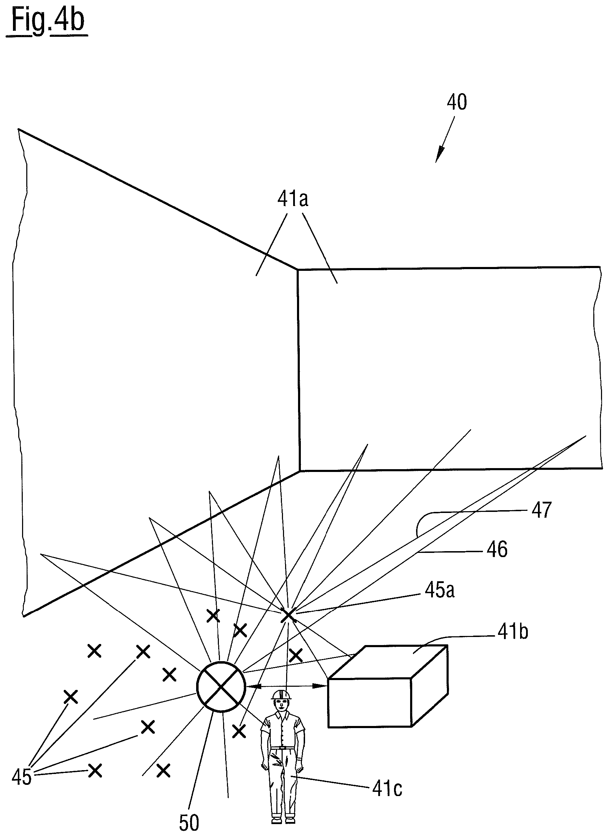

Es wird nun Bezug nehmend auf Fig. 4 ein nicht zur patentierten Erfindung gehörenden Verfahren zur Positionsermittlung eines beweglichen Objekts 50 in einer Umgebung, in der elektronisch erfassbare Merkmale vorhanden sind, beschrieben. Merkmale können dabei wieder als bewegungsrelevante Objekte in der Umgebung, insbesondere als Bewegungshindernisse für das bewegliche Objekt verstanden werden. In der Umgebungsrepräsentation entspricht jedem Merkmal bei Darstellung/Sichtweise/Speicherung als Gridmap eine oder mehrere Kacheln.

Die Positionsermittlung kann in einer zweidimensionalen Umgebungsrepräsentation/Karte erfolgen, etwa für ein in einer Umgebung fahrendes Fahrzeug, oder dreidimensional, etwa für einen arbeitenden Roboter oder fliegende Gerätschaft, z. B. eine Drohne. Dementsprechend ist die Umgebungsrepräsentation zweidimensional oder dreidimensional aufgebaut. Wie bisher wird ein zweidimensionales Beispiel beschrieben, ohne damit die Anwendung auf drei Dimensionen ausschließen zu wollen.

Die Umgebungsvermessung im Dreidimensionalen geschieht nicht nur im Kreis um das Fahrzeug herum, sondern letztlich vorzugsweise in der das Fahrzeug überwölbenden Halbsphäre oder das Fluggerät oder den Roboterarm umspannenden Sphäre. Auch dann werden Merkmale nach Richtung (Raumrichtung) und Abstand erfasst. Eine Vermessung kann dann die Erfassung mehrerer/vieler/aller Merkmale im gewählten Bereich (Halb/Kugel über/um dem Fahrzeug/Roboter) aufweisen. Die Ortsauflösung wird nach Maßgabe der Notwendigkeiten bzw. technischen Fähigkeiten gewählt.

Fig. 4a zeigt stark schematisiert eine Umgebung 40. Das eingekreiste Kreuz symbolisiert das Fahrzeug 50. Um das Fahrzeug 50 herum verteilt sind elektronisch erfassbare, mit Vierecken symbolisierte Merkmale 41a, 41b, ..., 41z. Sie können beispielsweise den in Fig. 1 gezeigten Wänden, Türen, Regalen, Personen und ähnlichem entsprechen. Jedem betrachteten Merkmal (bzw. jeder betrachteten Kachel) ist eine Vorhandenseinswahrscheinlichkeit V und eine Zuverlässigkeit Z zugeordnet. Die Vorhandenseinswahrscheinlichkeit sagt, als wie wahrscheinlich auf der Kachel ein Merkmal/Fahrhindernis bzw. Bewegungshindernis als vorhanden angesehen werden kann oder nicht. Die Zuverlässigkeit gibt an, als wie zuverlässig erfassbar das jeweilige Merkmal, das von der jeweiligen Kachel repräsentiert wird, angesehen werden kann. Dementsprechend sind dem Merkmal bzw. der Kachel 41a Va und Za zugeordnet, 41b sind Vb und Zb zugeordnet und 41z sind Vz und Zz zugeordnet.

Bei einer Umgebungsvermessung (etwa mit LIDAR, LADAR, stereoskopischer Bildverarbeitung oder ähnlichem) sollen theoretisch alle Merkmale oder Kacheln 41a mit Merkmalen darin erfasst werden, indem sie beispielsweise ausgesandtes (Laser-)Licht zurück Richtung Vermessungsgerät 56 streuen. Erfassung kann dabei Detektion von Richtung und Abstand des zurückstreuenden Merkmals bedeuten. Der theoretisch vollständigen Erfassung aller Merkmale während eines Umgebungsscans stehen jedoch praktische Hindernisse entgegen, etwa die begrenzte räumliche Auflösung und andere Widrigkeiten wie etwa Transparenz eines Merkmals (Hindernisses) und ähnliches. Mit den Pfeilen 42a, 42b, 42c, 42d, 42z sind die Erfassungen der jeweiligen Merkmale 41a, 41b, 41c, 41d und 41z angedeutet. Versucht wird die Erfassung für alle Merkmale 41a bis 41z. Der Übersichtlichkeit halber wurde aber auf die Vielzahl der zugehörigen Pfeile verzichtet.

Die Merkmale der Kacheln 41a bis 41z sind unterschiedlich zuverlässig erfassbar. Sie können schwierig erfassbar sein, weil sie beispielsweise klein oder filigran sind (Stütze des Regals 14) oder weil sie transparent/semitransparent sind (Glastür 13). Andere Merkmale wie beispielsweise Wände können sehr gut erfassbar sein. Die durch die jeweiligen Kacheln 41a repräsentierten Merkmale sind deshalb unterschiedlich zuverlässig erfassbar und haben unterschiedliche Werte Za bis Zz, wie schon beschrieben.

Bei der nicht zur patentierten Erfindung gehörenden Positionsermittlung vermisst das bewegliche Objekt seine Umgebung aus seiner momentanen Perspektive heraus, indem Erfassungen 42 der einzelnen Merkmale/Kacheln 41 vorgenommen werden. Das Vermessungsergebnis (die Gesamtheit der gewonnenen Erfassungen 42 der erfassten Merkmale) wird dann bewertet. Bei dieser Bewertung geht die Zuverlässigkeit der Erfassung der einzelnen Merkmale ein. Aus dem Bewertungsergebnis wird die Position des Fahrzeugs 50 in der Karte (repräsentierte Umgebung) bestimmt. Die Zuverlässigkeiten können als Gewichtungen der einzelnen Erfassungen 42 eingehen. Damit gehen zuverlässiger erfassbare Merkmale höhergewichtet in das Ergebnis ein, während unzuverlässigere Merkmale niedriger gewichtet in das Ergebnis eingehen. Auf diese Weise ist eine höhere Wahrscheinlichkeit für die Richtigkeit des Positionierungsergebnisses gegeben.

Neben der Zuverlässigkeit kann bei der Gewichtung der einzelnen Erfassungen 42 auch die Belegungswahrscheinlichkeit der von den einzelnen Erfassungen betroffenen Kacheln/Merkmale in die Bewertung der einzelnen Erfassungen eingehen. Diese kann zusammen mit der Zuverlässigkeit zur Gewichtung der einzelnen Erfassungen herangezogen werden und geht dann in das Gesamtergebnis ein.

Bei der Bewertung des Vermessungsergebnisses wird dieses, insbesondere die einzelnen Merkmalserfassungen 42a - 42z der Vermessung, mit Kartendaten abgeglichen. Es kann ein Vergleich von vermuteten Ergebnissen ausgehend von einer vermuteten Position mit den tatsächlich gewonnenen Vermessungsergebnissen erfolgen, wobei dieser Vergleich entsprechend den einzelnen Erfassungen 42a - z erfolgen kann und jeweils einzeln entsprechend der jeweiligen Zuverlässigkeit und ggf. auch Vorhandenseinswahrscheinlichkeiten gewichtet sein kann. Die Bewertungen der einzelnen Erfassungen 42 können dann mathematisch zusammengeführt werden, etwa durch Produktbildung (oder im Logarithmischen durch Summenbildung) und führen so zu einer Gesamtbewertung einer Vermessung.

Zur nicht zur patentierten Erfindung gehörenden Positionsermittlung kann insbesondere ein Partikelfilteralgorithmus herangezogen werden, der auch anhand Figur 4b erläutert wird. Er weist die folgenden Schritte auf: Zunächst wird eine vermutete Position des beweglichen Objekts bestimmt. Dies kann durch "Koppeln" ausgehend von einer früher bekannten Position erfolgen, also Fortschreiben der Position nach Maßgabe anderweitig gewonner Informationen, etwa Odometrie des Fahrzeugs oder sonstige Informationen wie etwa vorzugsweise stereoskopischer Bildverarbeitung. Auf diese Weise wird eine vermutete (hypothetische) Position des beweglichen Objekts festgelegt. Im Zweidimensionalen ist es eine zweidimensionale Koordinatenangabe, im Dreidimensionalen eine dreidimensionale Koordinatenangabe. In Fig. 4b entspricht dies der Position des Kreuzes 50.

Darüber hinaus werden mehrere oder sogar viele hypothetische Positionen festgelegt, die um das bewegliche Objekt herum verteilt sind. Diese hypothetischen Positionen können vordefiniert sein oder ad hoc erzeugt worden sein. Sie können zufällig verteilt sein oder quasi zufällig sein oder systematisch gesetzt werden. Diese hypothetischen Positionen werden als "Partikel" angesehen. In Fig. 4b sind dies die Kreuze 45, 45a

Als Nächstes wird für jede der festgelegten hypothetischen Positionen 45, 45a (Partikel) aus deren jeweiliger Perspektive heraus digital eine hypothetische Vermessung der Umgebung erzeugt. Dies ist ein theoretisch/digital/elektronisch stattfindender Vorgang, bei dem anhand der Kartendaten und der hypothetischen Position darin ermittelt wird, was eine Erfassungsvorrichtung 56, die an dem jeweiligen hypothetischen Ort steht, "sehen" bzw. erfassen müsste, wenn sie dort stünde. Für jede der hypothetischen Positionen 45, 45a wird auf diese Weise eine hypothetische Vermessung erzeugt, von denen jede wiederum viele hypothetische Erfassungen der die hypothetische Position umgebenden Merkmale 41 aufweist, wobei jede Erfassung eine Angabe nach Richtung und Entfernung aufweist..

Fig. 4b zeigt hierzu schematisch eine etwas konkretere Situation einer Umgebung 40. 50 symbolisiert das Fahrzeug, 41a bis 41c symbolisieren unterschiedliche Merkmale. Es kann davon ausgegangen werden, dass die Wand 41a Niederschlag in der Kartierung gefunden hat und mit entsprechenden Merkmalen jeweils hoher Vorhandenseinswahrscheinlichkeiten (z. B. 0,99 oder 1) an den entsprechenden Kacheln repräsentiert ist. Die mit 41b symbolisierte Kiste (beispielhaft für abgestelltes Lagergut, geparktes Fahrzeug, ...) ist gegebenenfalls auch kartiert, insbesondere mit einer geringeren Vorhandenseinswahrscheinlichkeit (z. B. 0,35). Die Person 41c wird konkret mit hoher Wahrscheinlichkeit nicht kartiert sein. Allerdings kann für die jeweilige Raumkachel aus früheren sporadischen Erfassungen heraus eine bestimmte Belegungswahrscheinlichkeit/Vorhandenseinswahrscheinlichkeit in die Karte Eingang gefunden haben. Diese kann dann gering sein, bspw. 0,07.

Mit den Kreuzen 45 sind die angesprochenen hypothetischen Positionen (Partikel) gezeigt. Das Fahrzeug 50 selbst befindet sich an einer vermuteten Position, wie in Fig. 4b eingezeichnet. Es sei darauf hingewiesen, dass diese vermutete Position anhand der Odometrie oder ähnlichem aus einer früher bestimmten Position fortgeschrieben worden sein kann. Es kann aber auch die frühere Position als eine (dann ungenauere) vermutete Position verwendet werden.

Mit 46 ist eine der vielen realen Erfassungen von Merkmalen aus der Perspektive des Fahrzeugs 50 bei einer Vermessung angedeutet. Mit 47 ist eine der vielen hypothetische Erfassungen von Merkmalen aus der Perspektive der einen zu Erläuterungszwecken herausgehobenen hypothetischen Position 45a angedeutet. Der Übersichtlichkeit halber sind diese Bezugszeichen nur für die Erfassung eines einzelnen Merkmals (einer Wandstelle) aus der Perspektive des Fahrzeugs und nur für eines der vielen Partikel 45 eingezeichnet. Die Erfassungen 46 aus der Perspektive des Fahrzeugs 50 geschehen real durch entsprechende Vorrichtungen 56 des Fahrzeugs 50, während die Erfassungen 47 hypothetisch/theoretisch sind und datenverarbeitend anhand der angenommenen Position und der Kartendaten geschieht.

Es wird dann für jede hypothetische Position 45 eine Wahrscheinlichkeit wh für deren Richtigkeit ermittelt. Diese Wahrscheinlichkeit hängt auch von den Zuverlässigkeitswerten der jeweils involvierten Merkmale ab. Darüber hinaus können deren jeweilige Belegungswahrscheinlichkeiten berücksichtigt werden. Die Wahrscheinlichkeit wh einer hypothetischen Position hängt von den Richtigkeits-Wahrscheinlichkeiten we der einzelnen Erfassungen der einzelnen Merkmale aus der jeweiligen hypothetischen Position heraus ab. Die Richtigkeits-Wahrscheinlichkeiten we der einzelnen Erfassungen 47 können dabei auch vom Unterschied des hypothetisch erfassten Abstands bei 47 zum real erfassten Abstand bei 46 abhängen. Die Abhängigkeit kann so sein, dass die Relevanz/Gewichtung umso geringer wird, je größer der Unterschied ist. Es kann hier eine Gaußverteilung um den real gemessenen Abstand herum angenommen werden mit einer geeignet gewählten Standardabweichung $\sigma$. Die Gewichtung we einer einzelnen Erfassung eines Merkmals i aus der Perspektive eines einzelnen Partikels i gesehen aus einer hypothetischen Position 45 heraus kann demnach mit folgender Formel bestimmt werden:

$$we(i,45a) = p1 * e^{-\exp}$$

mit

$$exp = p2*(dh(i,45a)-dr(i))^2/(2\sigma^2)$$

we(i, 45a) ist die Wahrscheinlichkeit der Richtigkeit einer Erfassung eines Merkmals i aus einer hypothetischen Position 45a heraus. dr(i) ist der real gemessene Abstand zum Merkmal i, dh(i,45a) ist der hypothetisch ermittelte Abstand zwischen Merkmal i und Partikel 45a, σ ist die Standardabweichung.

Mit p1 und p2 sind Platzhalter angesprochen, an deren Stelle der jeweilige Zuverlässigkeitswert Zi des erfassten Merkmals i einfließen kann. Der Wert Zi kann bei p1 multiplikativ zur Gewichtung der Richtigkeitswahrscheinlichkeit einfließen, oder er kann bei p2 multiplikativ in den Exponenten einfließen. Bei p1 und p2 kann auch die Vorhandenseinswahrscheinlichkeit/Belegungswahrscheinlichkeit V des jeweils betrachteten Merkmals/der betrachteten Kachel einfließen.

Auf diese Weise werden für eine hypothetische Position 45a mehrere/viele Wahrscheinlichkeiten we(i, 45a) einzelner Erfassungen einzelner Merkmale/Kacheln aus der hypothetischen Perspektive der jeweils hypothetischen Position erhalten.

Um für eine hypothetische Position (beispielsweise 45a) einen Gesamtwert der Wahrscheinlichkeit ihrer Richtigkeit zu erhalten, können dann die einzelnen Wahrscheinlichkeiten we(i, 45a) verknüpft werden, beispielsweise multiplikativ. Hier wird wie schon gesagt davon ausgegangen, dass die Normierungen entsprechend der stochastischen Rechnung erfolgen, also die Werte von we(i, 45a) < 1 sind. Wenn die hypothetische Vermessung aus der hypothetischen Position 45a heraus beispielsweise 100 Merkmale erfasst (also $1 \leq i \leq 100$), werden 100 jeweils zugeordnete Werte von we(i, 45a) erhalten. Diese können über alle i hinweg multipliziert oder im Logarithmischen addiert werden. Es kann auch an dieser Stelle die Zuverlässigkeit mit eingearbeitet werden, wenn sie nicht schon vorher berücksichtigt worden ist, etwa indem sie bei dieser Gesamtproduktbildung (oder logarithmischen Summenbildung) mit hineingerechnet (multipliziert, addiert) wird. Auf diese Weise wird eine Wahrscheinlichkeit wh (45a) der Richtigkeit einer bestimmten hypothetischen Position 45a erhalten.

Das obige Vorgehen wird für alle betrachteten hypothetischen Positionen 45 (Partikel) durchgeführt. Deren Anzahl kann größer 10, 20, 50 oder 100 sein. Damit numerische Vergleichbarkeit vorliegt, müssen bei der Bildung der Gesamtwahrscheinlichkeit wh für die jeweiligen hypothetischen Positionen 45 (Partikel) die Anzahl der betrachteten Einzelerfassungen we(i, 45a) gleich sein. Anhand der so gewonnenen Vielzahl von Werten von Gesamtwahrscheinlichkeiten wh der einzelnen hypothetischen Positionen 45 kann dann die tatsächliche Position des Fahrzeugs 50 ermittelt werden. Eine Herangehensweise hierfür ist es, die Position mit der besten/höchsten Wahrscheinlichkeit zu wählen. Eine andere Möglichkeit ist es, aus einer Anzahl von relativ guten Wahrscheinlichkeiten oder aus einer vorgegebenen Anzahl von Wahrscheinlichkeiten eine entsprechend den jeweiligen Wahrscheinlichkeiten wh gewichtete Mittelwertbildung der jeweiligen Positionen in x und in y (und gegebenenfalls in z) vorzunehmen und diese Mittelwerte als neue Position zu nehmen.

In die so ermittelte Position ist der Zuverlässigkeitswert der Merkmale bei der Gewichtung einzelner Messergebnisse eingegangen. Zuverlässige Merkmale gingen stärker gewichtet ein als weniger zuverlässige, so dass das Gesamtergebnis mit höherer Wahrscheinlichkeit näher am richtigen Ergebnis liegt.

Der beschriebene Algorithmus ist auch als "Monte-Carlo-Lokalisierung" bekannt. Es ist aber auch möglich, andere Lokalisierungsverfahren um die Berücksichtigung von Zuverlässigkeitswerten der erfassten Merkmale zu erweitern. Beispielsweise kann ein Kalman-Filter um die Berücksichtigung von Zuverlässigkeitswerten erweitert werden.

Jenseits der patentierten Erfindung können die ermittelten Zuverlässigkeitswerte auch zur Wegplanung für ein bewegliches Objekt in einer Umgebung herangezogen werden. Es wird hierbei zunächst eine digitale Repräsentation der Umgebung bereitgestellt, die mehrere Umgebungsmerkmale repräsentiert und für wenigstens einige dieser Merkmale auch jeweils Zuverlässigkeitswerte angibt. Diese Zuverlässigkeitswerte können wie oben beschrieben gestaltet und ermittelt sein und liegen neben Belegungswahrscheinlichkeiten/ Vorhandenseinswahrscheinlichkeiten kachelweise/merkmalsweise räumlich aufgelöst vor. Es wird dann ein Wegpunkt als erster Punkt eines zu planendes Weges gesetzt. Am Anfang des Verfahrens kann der erste Punkt die momentane eigene Position sein. Im weiteren Verlauf kann der erste Punkt ein zuletzt gewählter Punkt des Weges sein. Es wird dann ein dem ersten Punkt folgender und von diesem räumlich beabstandeter zweiter Punkt mit einem Wegfindungsverfahren oder Routing-Algorithmus festgelegt, das bzw. der hier nicht konkreter Gegenstand des Interesses ist.

Als Nächstes kann der zweite Punkt unter Verwendung der digitalen Repräsentation einschließlich der angegebenen Zuverlässigkeitswerte auf Brauchbarkeit / Befahrbarkeit überprüft werden. Je nach Abstand des zweiten Punkts vom ersten Punkt können hierbei auch zwischen beiden liegende Punkte auf Befahrbarkeit überprüft werden, wie angegeben. Wenn die Überprüfung ein vorgegebenes Kriterium erfüllt, insbesondere Befahrbarkeit des zweiten Wegpunkts und gegebenenfalls dazwischenliegender Wegpunkte zeigt, wird der zweite Punkt als weiterer Wegpunkt des zu planenden Weges gespeichert und als neuer erster Punkt zum Fortsetzen des Verfahrens mit der Wahl eines diesem neuen ersten Punkt folgenden zweiten Punktes verwendet. Wenn das vorgegebene Kriterium nicht erfüllt ist, wird ein anderer, dem ersten Punkt folgender zweiter Punkt gewählt und dieser wiederum gegebenenfalls mit weiteren dazwischenliegenden Punkten auf Befahrbarkeit und Verwendung der digitalen Repräsentation einschließlich der angegebenen Zuverlässigkeitswerte überprüft.

Auf diese Weise arbeitet sich das Verfahren iterativ voran, bis ein Weg hin zum gewünschten Ziel gefunden ist. Auch hier werden zur Beurteilung der Brauchbarkeit der hypothetischen neuen Wegpunkte Zuverlässigkeitswerte eingebunden, um reale Gegebenheiten besser als im Stand der Technik in die Wegfindung einfließen lassen zu können.

Allgemein sollen in dieser Beschreibung Merkmale auch dann als miteinander kombinierbar angesehen werden, wenn diese Kombination nicht ausdrücklich angesprochen ist, soweit die Kombination technisch möglich ist. Merkmale, die in einem bestimmten Kontext oder Zusammenhang beschrieben sind, sollen auch aus diesem Kontext oder Zusammenhang heraus lösbar verstanden werden und mit anderen Kontexten oder Zusammenhängen und kombinierbar angesehen werden. Verfahrensmerkmale sollen auch als Offenbarung für solche Verfahrensmerkmale implementierende Vorrichtungen verstanden werden, und umgekehrt.

Bezugszeichenliste

| 10 | Umgebung |
|---|---|
| 10' | Kartierung |
| 11 | Wand |
| 11' | Wandkartierung |
| 12 | Rolltor |
| 12' | Rolltorkartierung |
| 13 | Glastür |
| 13' | Glastürkartierung |
| 14 | Regal |
| 14' | Regalkartierung |
| 15 | Boden |
| 16 | Decke |
| 17 | Person |
| 17' | Personenkartierung |
| 30 | Datentupel |
| 31 | Koordinatendaten |
| 32 | Vorhandenseinswahrscheinlichkeit |
| 33 | Zuverlässigkeit |
| 34 | Markierung (Fixierungsflag) |
| 35-37 | Historiedaten |
| 38 | Messhistorie |
| 40 | Umgebung |
| 41a-z | Merkmale |
| 42a-z | Erfassungen |
| 45, 45a | hypothetische Positionen (Partikel) |
| 46 | reale Erfassung |
| 47 | hypothetische Erfassung |
| 50 | Fahrzeug |
| 50' | weiteres Fahrzeug |
| 51 | Speicher |
| 51a-e | Datenteile |
| 52 | Schnittstelle |
| 53 | Steckverbindung |
| 54-55 | Schnittstellen |
| 56 | Vermessungsvorrichtung |
| 57 | Server |
| 58 | Antrieb |

**Patentansprüche**

**1.** Umgebungsrepräsentationsvorrichtung (50) mit einem Datenträger (51) und einem damit verbundenen Schnittstellengerät (52),

wobei der Datenträger Daten trägt, die eine Umgebung repräsentieren, mit a. Kartendatenteilen (51a), die ortsauflösend Merkmale einer Umgebung angeben, wobei die Kartendatenteile Vorhandenseinswahrscheinlichkeiten darstellen, die ortsauflösend Vorhandenseinswahrscheinlichkeiten von Merkmalen einer Umgebung angeben und die ortsauflösend angeben, als wie wahrscheinlich vorhanden ein repräsentiertes Merkmal angesehen werden kann, b. Zuverlässigkeitsdatenteilen (51b), die ortsauflösend Zuverlässigkeitsdaten von Merkmalen einer Umgebung angeben und die ortsauflösend angeben, als wie zuverlässig durch eine Messvorrichtung (56) zum Vermessen der Umgebung eines Fahrzeugs erfassbar die jeweils repräsentierten Merkmale angesehen werden können,
und wobei das Schnittstellengerät Kartendaten und Zuverlässigkeitsdaten einander ortsauflösend zugeordnet zugänglich macht.

2. Vorrichtung (50) nach Anspruch 1,
**dadurch gekennzeichnet,**
**dass** der Datenträger Historiedatenteile (51c) trägt, die ortsauflösend Erfassungshistorien von Merkmalen einer Umgebung angeben, und wobei das Schnittstellengerät auch die Historiedaten den anderen Daten ortsauflösend zugeordnet zugänglich macht, wobei die Historiedatenteile (51c) einen oder mehrere der folgen Werte angeben:

- Datum der letzten Erfassung eines Merkmals,
- einen Zählwert dazu, wie oft eine Kachel als belegt erkannt wurde,
- einen Zählwert dazu, wie oft eine Kachel als frei erkannt wurde,
- einen Zählwert dazu, wie oft eine Änderung des Belegtzustands einer Kachel erkannt wurde,
- Anlagedatum des Kartierungswerts,

und/oder
**dass** der Datenträger Markierungsdatenteile (51d) trägt, die ortsauflösend markieren, welche der Zuverlässigkeitsdaten und/oder der Kartendaten im Laufe der Zeit änderbar sein sollen und welche nicht, und wobei das Schnittstellengerät auch die Markierungsdatenteile (51d) den anderen Daten ortsauflösend zugeordnet zugänglich macht.

3. Verfahren zur Bestimmung einer elektronisch nutzbaren Repräsentation einer Umgebung, wobei in der Umgebung Merkmale vorhanden sind, mit den Schritten

- Bereitstellen von Kartendaten (31), die ortsauflösend Merkmale der Umgebung angeben, wobei die Kartendaten Kartendatenteile aufweisen, die Vorhandenseinswahrscheinlichkeiten darstellen, die ortsauflösend Vorhandenseinswahrscheinlichkeiten von Merkmalen einer Umgebung angeben und die ortsauflösend angeben, als wie wahrscheinlich vorhanden ein repräsentiertes Merkmal angesehen werden kann,
- Ermitteln von Zuverlässigkeitsdaten (32) einzelner Merkmalsangaben, die von den bereitgestellten Kartendaten erfasst sind, wobei die Zuverlässigkeitsdaten ortsauflösend angeben, als wie zuverlässig durch eine Messvorrichtung zum Vermessen der Umgebung eines Fahrzeugs erfassbar die jeweils angegebenen Merkmale angesehen werden können, und
- Speichern der Kartendaten und der Zuverlässigkeitsdaten in ortsauflösend einander zugeordneter Weise als Umgebungsrepräsentation (10).

4. Verfahren nach Anspruch 3,
**dadurch gekennzeichnet, dass**

die Zuverlässigkeitsdaten einzelner Kartenbereiche anhand von Streuungen von zeitnah, insbesondere innerhalb eines vorbestimmten Zeitintervalls, zueinander ermittelten Messwerten gleicher Kartenbereiche bestimmt werden, und/oder dass
die Zuverlässigkeitsdaten einzelner Merkmalsbereiche anhand des Alters von früher ermittelten Messwerten gleicher Kartenbereiche bestimmt werden, und/oder dass
die Zuverlässigkeitsdaten einzelner Kartenbereiche manuell eingegeben und/oder verändert werden, vorzugsweise über eine graphische Benutzeroberfläche.

5. Verfahren nach einem der Ansprüche 3 bis 4,
**dadurch gekennzeichnet, dass**
die Zuverlässigkeitsdaten während der Nutzung einer Umgebungsrepräsentation nach Maßgabe aktueller Messwerte eines die Umgebungsrepräsentation nutzenden Geräts oder Fahrzeugs und nach Maßgabe von Historiedaten ermittelt und/oder verändert werden.

6. Verfahren nach einem der Ansprüche 3 bis 5,
**dadurch gekennzeichnet, dass**

die Merkmalsdaten der Kartendaten ortsauflösend eine Vorhandenseinswahrscheinlichkeit eines Merkmals angeben,
wobei
die ortsaufgelösten Vorhandenseinswahrscheinlichkeitswerte und die ortsaufgelösten Zuverlässigkeitswerte getrennt gespeichert und/oder zu einem ortsaufgelösten gemeinsamen Parameter verrechnet werden können.

7. Verfahren nach einem der vorherigen Verfahrensansprüche,
**dadurch gekennzeichnet, dass**
für einzelne Kartenbereiche deren Zuverlässigkeitsdaten als unveränderlich gekennzeichnet werden, vorzugsweise über eine graphische Benutzerschnittstelle, und sie nicht verändert werden.

8. Verfahren nach einem der vorherigen Verfahrensansprüche,
**dadurch gekennzeichnet, dass**
die repräsentierte Umgebung logisch in eine Vielzahl von Kacheln (21) unterteilt ist, wobei die Kartendaten und die Zuverlässigkeitsdaten kachelweise aufgelöst sind, wobei einer Kachel ein Datentupel zugeordnet ist, das für diese Kachel mindestens eine Vorhandenseinswahrscheinlichkeit und einen Zuverlässigkeitswert aufweist.

9. Verfahren nach einem der Ansprüche 3 bis 8,
**dadurch gekennzeichnet, dass**
in der repräsentierten Umgebung mehrere bekannte Reflektorpunkte angebracht sind, wobei die Kartendaten und die Zuverlässigkeitsdaten reflektorpunktweise aufgelöst gespeichert werden.

10. Verfahren nach Anspruch 8 oder 9,
**dadurch gekennzeichnet, dass**
einer Kachel bzw. einem Reflektorpunkt historierelevante Daten zugeordnet sind, insbesondere einer oder mehrere der folgenden Werte

• Zahl der Erfassungen eines Merkmals an der Kachel,
• Zahl der Nichterfassung eines Merkmals an der Kachel,
• Zahl der Änderungen der Erfassung eines Merkmals,
• Datum der letzten Erfassung,
• Datum der ersten Erfassung.

11. Verfahren nach Anspruch 5,
**dadurch gekennzeichnet, dass**
die aktuellen Messwerte durch Vermessen der Umgebung aus der Perspektive des beweglichen Objekts gewonnen werden, wobei die Vermessung das Erfassen mehrerer Merkmale der Umgebung aufweist und die Messwerte einer zeitlichen Analyse unterzogen werden.

12. Verfahren nach einem der vorherigen Verfahrensansprüche,
**dadurch gekennzeichnet, dass**
die Zuverlässigkeitsdaten jeweils als Faktor zwischen 0 und 1 ermittelt werden und/oder als dazu logarithmischer Wert zwischen $-\infty$ und 0.

13. Vorrichtung zur Durchführung des Verfahrens nach einem der Ansprüche 3 bis 12.

14. Vorrichtung nach Anspruch 13,
**dadurch gekennzeichnet, dass**

die Vorrichtung ein verteiltes System mit miteinander mindestens zeitweise vorzugsweise drahtlos verbundenen Rechnern aufweist, wobei mindestens einer der Rechner Teil eines autonom navigierenden Fahrzeugs ist, das Sensorik zur Umgebungserfassung aufweist,

wobei das verteilte System ein peer-to-peer-System oder ein server-client-system sein kann.

**Claims**

1. An environment representation apparatus (50) comprising a data carrier (51) and an interface device (52) connected thereto,
   wherein the data carrier carries data which represent an environment, comprising

   a. map data portions (51a) which indicate features of an environment in a spatially resolving manner, wherein the map data portions represent presence probabilities which indicate presence probabilities of features of an environment in a spatially resolving manner and which indicate in a spatially resolving manner how likely to be present a represented feature can be regarded as,
   b. reliability data portions (51b) which indicate reliability data of features of an environment in a spatially resolving manner and which indicate in a spatially resolving manner how reliably detectable by a measurement apparatus (56) for measuring the environment of a vehicle the respective represented features can be regarded as,

   and wherein the interface device makes map data and reliability data accessible associated in a spatially resolving manner with one another.

2. An apparatus (50) in accordance with claim 1,
   **characterized in that**
   the data carrier carries history data portions (51c) which indicate detection histories of features of an environment in a spatially resolving manner, and with the interface device also making the history data accessible associated in a spatially resolving manner with the other data, with the history data portions (51c) indicating one or more of the following values:

   • date of the last detection of a feature,
   • a count value as to how often a tile was recognized as occupied,
   • a count value as to how often a tile was recognized as free,
   • a count value as to how often a change in the occupancy state of a tile was recognized,
   • creation date of the mapping value,

   and/or
   **in that** the data carrier carries marking data portions (51d) which mark in a spatially resolving manner which of the reliability data and/or the map data are to be changeable over time and which not, and with the interface device also making the marking data portions (51d) accessible associated in a spatially resolving manner with the other data.

3. A method of determining an electronically usable representation of an environment, wherein features are present in the environment, comprising the steps

   - providing map data (31) which indicate features of the environment in a spatially resolving manner, wherein the map data have map data portions which represent presence probabilities which indicate presence probabilities of features of an environment in a spatially resolving manner and which indicate in a spatially resolving manner how likely to be present a represented feature can be regarded as,
   - determining reliability data (32) of individual feature indications which are captured by the map data provided, wherein the reliability data indicate in a spatially resolving manner how reliably detectable by a measurement apparatus for measuring the environment of a vehicle the respective indicated features can be regarded as, and
   - storing the map data and the reliability data in a spatially resolving mutually associated manner as an environment representation (10).

4. A method in accordance with claim 3,
   **characterized in that**

   the reliability data of individual map areas are determined on the basis of scatterings of measurement values of identical map areas determined in a timely manner with respect to one another, in particular within a predetermined time interval,
   and/or **in that**

the reliability data of individual feature areas are determined on the basis of the age of previously determined measurement values of identical map areas,
and/or **in that**
the reliability data of individual map areas are manually input and/or changed, preferably via a graphical user interface.

5. A method in accordance with one of the claims 3 to 4,
**characterized in that**
the reliability data are determined and/or changed during the use of an environment representation in accordance with current measurement values of a device or vehicle using the environment representation and in accordance with history data.

6. A method in accordance with any one of the claims 3 to 5,
**characterized in that**

the feature data of the map data indicate a presence probability of a feature in a spatially resolving manner, with
the spatially resolved presence probability values and the spatially resolved reliability values being able to be stored separately and/or being able to be offset to form a spatially resolved common parameter.

7. A method in accordance with any one of the preceding method claims, **characterized in that**,
for individual map areas, their reliability data are marked as unchangeable, preferably via a graphical user interface, and are not changed.

8. A method in accordance with any one of the preceding method claims, **characterized in that**
the represented environment is logically divided into a plurality of tiles (21), with the map data and the reliability data being resolved tile-wise, with a data tuple being associated with a tile that has at least one presence probability and one reliability value for this tile.

9. A method in accordance with any one of the claims 3 to 8,
**characterized in that**
a plurality of known reflector points are applied in the represented environment, with the map data and the reliability data being stored resolved reflector-point-wise.

10. A method in accordance with claim 8 or claim 9,
**characterized in that**
history-relevant data are associated with a tile or a reflector point, in particular one or more of the following values:

   • number of detections of a feature at the tile,
   • number of non-detections of a feature at the tile,
   • number of changes of the detection of a feature,
   • date of the last detection,
   • date of the first detection.

11. A method in accordance with claim 5,
**characterized in that**
the current measurement values are obtained by measuring the environment from the perspective of the movable object, with the measurement comprising the detection of a plurality of features of the environment and the measurement values being subjected to a time analysis.

12. A method in accordance with any one of the preceding method claims, **characterized in that**
the reliability data are in each case determined as a factor between 0 and 1 and/or as a logarithmic value with respect thereto between $-\infty$ and 0.

13. An apparatus for performing the method in accordance with any one of the claims 3 to 12.

14. An apparatus in accordance with claim 13,
**characterized in that**

the apparatus has a distributed system comprising computers which are at least temporarily connected, preferably wirelessly connected, to one another, with at least one of the computers being part of an automated guided vehicle which has a sensor system for environment detection,
with the distributed system being able to be a peer-to-peer system or a server-client system.

**Revendications**

1. Dispositif de représentation de l'environnement (50) comprenant un support de données (51) et un appareil d'interface (52) connecté à celui-ci,
le support de données portant des données représentant un environnement, incluant

   a. des parties de données cartographiques (51a) qui indiquent avec résolution spatiale des caractéristiques d'un environnement, les parties de données cartographiques illustrent des probabilités de présence qui indiquent avec résolution spatiale les probabilités de présence de caractéristiques d'un environnement et qui indiquent avec résolution spatiale à quel point une caractéristique représentée peut être considérée comme étant probablement présente,
   b. des parties de données de fiabilité (51b) qui indiquent avec résolution spatiale des données de fiabilité de caractéristiques d'un environnement et qui indiquent avec résolution spatiale à quel point les caractéristiques respectives représentées peuvent être considérées comme étant fiables à pouvant être détectées par un dispositif de mesure (56) destiné à mesurer l'environnement d'un véhicule,

   et l'appareil d'interface rend accessibles les données cartographiques et les données de fiabilité associées avec résolution spatiale les unes aux autres.

2. Dispositif (50) selon la revendication 1,
**caractérisé en ce que**

   le support de données porte des parties de données historiques (51c) qui indiquent avec résolution spatiale des historiques de détection de caractéristiques d'un environnement, et l'appareil d'interface rend également accessibles les données historiques associées avec résolution spatiale aux autres données, et/ou
   les parties de données historiques (51c) indiquent une ou plusieurs des valeurs suivantes :

   • la date de la dernière détection d'une caractéristique,
   • une valeur de comptage indiquant le nombre de fois qu'une tuile a été reconnue comme étant occupée,
   • une valeur de comptage indiquant le nombre de fois qu'une tuile a été reconnue comme étant libre,
   • une valeur de comptage indiquant le nombre de fois qu'un changement d'état d'occupation d'une tuile a été détecté,
   • la date de création de la valeur cartographique,

   et/ou
   **en ce que** le support de données porte des parties de données de marquage (51d) qui marquent avec résolution spatiale quelles des données de fiabilité et/ou des données cartographiques doivent être modifiables au cours du temps et quelles desdites données ne doivent pas l'être, et l'appareil d'interface rend également accessibles les parties de données de marquage (51d) associées avec résolution spatiale aux autres données.

3. Procédé pour définir une représentation utilisable électroniquement d'un environnement, des caractéristiques étant présentes dans l'environnement, comprenant les étapes consistant à

   - fournir des données cartographiques (31) qui indiquent avec résolution spatiale des caractéristiques de l'environnement, les données cartographiques comprenant des parties de données cartographiques qui représentent des probabilités de présence, qui indiquent avec résolution spatiale des probabilités de présence de caractéristiques d'un environnement et qui indiquent avec résolution spatiale à quel point une caractéristique représentée peut être considérée comme étant probablement présente,
   - déterminer des données de fiabilité (32) de certaines indications de caractéristique, qui sont saisies à partir des données cartographiques fournies, les données de fiabilité indiquant avec résolution spatiale à quel point les caractéristiques respectives indiquées peuvent être considérées comme étant fiables à pouvoir être détectées par un dispositif de mesure pour mesurer l'environnement d'un véhicule, et

- mémoriser les données cartographiques et les données de fiabilité de manière associée avec résolution spatiale les unes aux autres, en tant que représentation de l'environnement (10).

4. Procédé selon la revendication 3,
   **caractérisé en ce que**

   les données de fiabilité de certaines zones cartographiques sont définies à l'aide de dispersions de valeurs de mesure de zones cartographiques identiques, valeurs qui sont déterminées dans un court délai les unes des autres, en particulier dans un intervalle de temps prédéfini,
   et/ou **en ce que**
   les données de fiabilité de certaines zones de caractéristique sont définies à l'aide de l'âge de valeurs de mesure de zones cartographiques identiques, valeurs qui ont été déterminées précédemment,
   et/ou **en ce que**
   les données de fiabilité de certaines zones cartographiques sont entrées et/ou modifiées manuellement, de préférence par le biais d'une interface utilisateur graphique.

5. Procédé selon l'une des revendications 3 à 4,
   **caractérisé en ce que**
   les données de fiabilité sont déterminées et/ou modifiées pendant l'utilisation d'une représentation de l'environnement en fonction des valeurs de mesure actuelles d'un appareil ou d'un véhicule utilisant la représentation de l'environnement et en fonction des données historiques.

6. Procédé selon l'une des revendications 3 à 5,
   **caractérisé en ce que**

   les données de caractéristique des données cartographiques indiquent avec résolution spatiale une probabilité de présence d'une caractéristique, et
   les valeurs de probabilité de présence résolues et les valeurs de fiabilité résolues peuvent être stockées séparément et/ou être calculées en un paramètre commun résolu.

7. Procédé selon l'une des revendications précédentes,
   **caractérisé en ce que**
   pour certaines zones cartographiques, leurs données de fiabilité sont marquées comme étant invariables, de préférence par l'intermédiaire d'une interface utilisateur graphique, et elles ne sont pas modifiées.

8. Procédé selon l'une des revendications précédentes,
   **caractérisé en ce que**

   l'environnement représenté est divisé logiquement en une pluralité de tuiles (21), les données cartographiques et les données de fiabilité étant résolues par tuile, et
   un tuple de données est associé à une tuile, lequel présente pour cette tuile au moins une probabilité de présence et une valeur de fiabilité.

9. Procédé selon l'une des revendications 3 à 8,
   **caractérisé en ce que**

   plusieurs points réflecteurs connus sont placés dans l'environnement représenté, et
   les données cartographiques et les données de fiabilité sont stockées de façon résolue point réflecteur par point réflecteur.

10. Procédé selon la revendication 8 ou 9,
    **caractérisé en ce que**
    des données pertinentes pour l'historique sont associées à une tuile ou à un point réflecteur, en particulier une ou plusieurs des valeurs suivantes

    • le nombre de détections d'une caractéristique sur la tuile,
    • le nombre de non-détections d'une caractéristique sur la tuile,
    • le nombre de modifications de la détection d'une caractéristique,

- la date de la dernière détection,
- la date de la première détection.

**11.** Procédé selon la revendication 5,
**caractérisé en ce que**
les valeurs de mesure actuelles sont obtenues en mesurant l'environnement depuis la perspective de l'objet mobile, la mesure comprenant la détection de plusieurs caractéristiques de l'environnement et les valeurs de mesure étant soumises à une analyse temporelle.

**12.** Procédé selon l'une des revendications précédentes,
**caractérisé en ce que**
les données de fiabilité sont déterminées chacune comme un facteur entre 0 et 1 et/ou comme une valeur logarithmique correspondante entre $-\infty$ et 0.

**13.** Dispositif pour la mise en œuvre du procédé selon l'une des revendications 3 à 12.

**14.** Dispositif selon la revendication 13,
**caractérisé en ce que**

le dispositif comporte un système réparti comprenant des ordinateurs reliés entre eux au moins temporairement, de préférence sans fil, l'un au moins des ordinateurs faisant partie d'un véhicule à navigation autonome comportant des capteurs pour la détection de l'environnement,
le système réparti pouvant être un système pair à pair ou un système serveur-client.

## Fig.1

## Fig.2

## Fig.3

30

| | |
|---|---|
| x, y | — 31 |
| Vo Wa | — 32 |
| ZuV | — 33 |
| Fix Flag | — 34 |
| $H_1$ | — 35 |
| $H_2$ | — 36 |
| $H_3$ | — 37 |
| MH | — 38 |

## Fig.4a

40

41a
Va
Za

41b
Vb
Zb

41c
Vc
Zc

42b

42c

42a

41d
Vd
Zd

41f
Vf
Zf

41e
Ve
Ze

42d

50

41x
Vx
Zx

42z

41y
Vy
Zy

41z
Vz
Zz

## Fig.4b

Fig.5

EP 3 534 112 B1

**EP 3 534 112 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180012370 A1
- US 20170334069 A1
- US 20080033645 A1
- US 20050234679 A1
- WO 2019000417 A1
- US 20120323432 A1
- DE 102010028090 A1